# EUROPEAN PATENT APPLICATION

(11) **EP 4 811 074 A1**
(43) Date of publication of application: **23.09.2026**
(21) Application number: 24919996.9
(22) Date of filing: 25.12.2024
(51) Int. Cl.: G06F 1/16

(54) **FOLDABLE ELECTRONIC DEVICE**

(30) Priority: 22.01.2024 CN 202410092918
(71) Applicant: Honor Device Co., Ltd., Shenzhen, Guangdong 518040 (CN)
(72) Inventor: GAO, Mingqian, Shenzhen, Guangdong 518040 (CN); DONG, Shaohong, Shenzhen, Guangdong 518040 (CN); PENG, Gaofeng, Shenzhen, Guangdong 518040 (CN)
(74) Representative: Goddar, Heinz J.
(86) International application number: PCT/CN2024/142405
(87) International publication number: WO 2025/156918

(57) **Abstract**

This application provides a foldable electronic device, and relates to the field of electronic product technologies. The foldable electronic device includes a first housing and a rotating shaft mechanism. The rotating shaft mechanism includes a base, a first shielding plate, and a first hinge member. The first shielding plate is provided with a first matching part and a first connecting part. The first hinge member is fixedly connected to the first housing. The first hinge member is hingedly connected to an end of the base. The first hinge member is provided with a first connecting structure. The first connecting structure is provided with a first arc surface and a first arc sliding surface. The first arc surface and the first arc sliding surface share a same center line of curvature, which is a first center line of curvature. The first arc surface and the first arc sliding surface are located on a same side of the first center line of curvature and have opposite orientations. The first arc surface and the first arc sliding surface are distributed in an extension direction of the first center line of curvature. When the foldable electronic device switches between an unfolded state and a folded state, the first matching part slides along the first arc surface, and the first connecting part slides along the first arc sliding surface. This facilitates reduction of thickness of the rotating shaft mechanism.

## Description

This application claims priority to Chinese Patent Application No. 202410092918.7, filed with the China National Intellectual Property Administration on January 22, 2024 and entitled "FOLDABLE ELECTRONIC DEVICE", which is incorporated herein by reference in its entirety.

### TECHNICAL FIELD

This application relates to the field of electronic product technologies, and in particular, to a foldable electronic device.

### BACKGROUND

As foldable electronic devices develop, the foldable electronic devices are increasingly popular among consumers. The foldable electronic device may include a foldable screen and a support apparatus. The support apparatus may include a first housing, a second housing, and a rotating shaft mechanism connected between the first housing and the second housing. The support apparatus is configured to support the foldable screen. The first housing and the second housing are configured to be rotatable relative to each other via the rotating shaft mechanism, to enable folding and unfolding of the foldable electronic device.

To meet a design requirement of an increasingly thin foldable electronic device, a rotating shaft mechanism also needs to be increasingly thin. In a related technology, a rotating shaft mechanism is thick, and needs to be further thinned.

### SUMMARY

This application provides a foldable electronic device, to reduce thickness of a rotating shaft mechanism, so as to facilitate reduction of thickness of the foldable electronic device.

To achieve the foregoing objectives, the following technical solutions are used in this application.

According to a first aspect, this application provides a foldable electronic device, including a first housing and a rotating shaft mechanism. The rotating shaft mechanism includes a base, a first shielding plate, and a first hinge member. The first shielding plate is provided with a first matching part and a first connecting part. The first hinge member is fixedly connected to the first housing, and the first hinge member is hingedly connected to one side of the base. The first hinge member is provided with a first connecting structure corresponding to the first matching part and the first connecting part on the first shielding plate. The first connecting structure is provided with a first arc surface and a first arc sliding surface. The first arc surface and the first arc sliding surface share a same center line of curvature, which is a first center line of curvature. The first arc surface and the first arc sliding surface are located on a same side of the first center line of curvature and have opposite orientations. The first arc surface and the first arc sliding surface are distributed in an extension direction of the first center line of curvature. When the foldable electronic device switches between an unfolded state and a folded state, the first matching part slides along the first arc surface, and the first connecting part slides along the first arc sliding surface.

In the foldable electronic device in this application, the first connecting structure is provided with the first arc surface and the first arc sliding surface, the first arc surface and the first arc sliding surface share a same center line of curvature, which is the first center line of curvature, and the first arc surface and the first arc sliding surface are located on a same side of the first center line of curvature. In this way, when the foldable electronic device switches between the unfolded state and the folded state, the first matching part slides along the first arc surface, and the first connecting part slides along the first arc sliding surface, so that the first shielding plate and the first hinge member can rotate relative to each other using the first center line of curvature as a rotation center line. In addition, because the first arc surface and the first arc sliding surface have opposite orientations, in a radial direction of the first arc surface, the first matching part and the first connecting part can be positionally limited between the first arc surface and the first arc sliding surface, or the first arc surface and the first arc sliding surface can be positionally limited between the first matching part and the first connecting part, so that reliability of fitting is high. In addition, the first arc surface and the first arc sliding surface are distributed in the extension direction of the first center line of curvature. In this way, the first arc surface and the first arc sliding surface are staggered in the radial direction of the first arc surface. Therefore, reliability of fitting between the first matching part and the first arc surface and reliability of fitting between the first connecting part and the first arc sliding surface are not limited by a radial distance between the first arc surface and the first arc sliding surface. In this way, it is beneficial to ensure that the first arc surface and the first arc sliding surface have large arc lengths and ensure that the first hinge member and the first shielding plate can fit reliably, to help reduce overall thickness of the first hinge member and the first connecting structure by reducing a distance between the first arc surface and the first arc sliding surface in the radial direction of the first arc surface, so as to facilitate reduction of thickness of the rotating shaft mechanism.

In a possible implementation of the first aspect of this application, the first connecting structure is an opening formed on the first hinge member, the first arc surface and the first arc sliding surface are both provided in the opening, and the first matching part and the first connecting part are located in the opening. Therefore, the structure is simple, and the rotating shaft mechanism has a small volume. This is beneficial to further reduce thickness of the rotating shaft mechanism, and achieve a design of a thin rotating shaft mechanism.

In a possible implementation of the first aspect of this application, the opening has a first side wall surface, a second side wall surface, and a third side wall surface, the first side wall surface and the second side wall surface face each other in the extension direction of the first center line of curvature, the third side wall surface is connected between an end of the first side wall surface close to the base and an end of the second side wall surface close to the base, the first side wall surface is provided with a raised part extending toward the second side wall surface, the first matching part is located between the raised part and the third side wall surface, and the first arc surface is formed on a surface of the raised part facing the first matching part. Therefore, the structure is simple.

In a possible implementation of the first aspect of this application, the first matching part has a first arc matching surface, a limiting space is formed between the first shielding plate and a side of the first matching part that the first arc matching surface faces, the raised part is located in the limiting space, and the first matching part is in sliding fit with the first arc surface via the first arc matching surface. Therefore, the structure is simple, and the rotating shaft mechanism has a small volume. This is beneficial to further reduce thickness of the rotating shaft mechanism, and achieve a design of a thin rotating shaft mechanism.

In a possible implementation of the first aspect of this application, the second side wall surface includes a first region and a second region, the second region is recessed relative to the first region toward a direction away from the first side wall surface to define a recess, the first arc sliding surface is formed on a side wall of the recess, and the first connecting part is located in the recess. Therefore, the structure is simple, and the rotating shaft mechanism has a small volume. This is beneficial to further reduce thickness of the rotating shaft mechanism, and achieve a design of a thin rotating shaft mechanism.

In a possible implementation of the first aspect of this application, the first matching part has a limiting part, and in the extension direction of the first center line of curvature, the limiting part is positionally limited between the first side wall surface and the first region. In this way, it is beneficial to limit the first matching part together with the first connecting part at the opening, and it is also beneficial to limit the first shielding plate and the first hinge member in the extension direction of the first center line of curvature, to prevent relative movement of the first shielding plate and the first hinge member in the extension direction of the first center line of curvature, so as to improve reliability of fitting between the first shielding plate and the first hinge member. In a possible implementation of the first aspect of this application, an end of the first arc matching surface close to the first connecting part is provided with a connecting rib, and the connecting rib is separately connected to the first shielding plate and the first connecting part. In this way, it is beneficial to improve overall structural strength of the first matching part, the first connecting part, and the first shielding plate.

In a possible implementation of the first aspect of this application, the connecting rib together with the first connecting part are positionally limited between the bottom wall of the recess and the raised part. In this way, it is beneficial to limit the first matching part together with the first connecting part at the opening, and it is also beneficial to limit the first shielding plate and the first hinge member in the extension direction of the first center line of curvature, to prevent relative movement of the first shielding plate and the first hinge member in the extension direction of the first center line of curvature, so as to improve reliability of fitting between the first shielding plate and the first hinge member.

In a possible implementation of the first aspect of this application, the opening extends to an end of the first hinge member away from the base, to prevent the connecting rib, the first matching part, and the first connecting part as a whole from interfering with the first hinge member in a process of switching between the unfolded state and the folded state.

In a possible implementation of the first aspect of this application, a surface of the first matching part facing away from the first arc surface is an arc-shaped structure surface, and a center line of curvature of the arc-shaped structure surface is the first center line of curvature. The structure is simple and is easy to be processed and manufactured. In addition, because the arc-shaped structure surface uses the first center line of curvature as a center line of curvature, in a process in which the foldable electronic device switches between the unfolded state and the folded state, a distance between the arc-shaped structure surface and the third side wall surface remains unchanged, so that interference between the arc-shaped structure surface and the third side wall surface can be avoided.

In a possible implementation of the first aspect of this application, a clearance surface is formed at an end of the arc-shaped structure surface away from the first shielding plate; and in a plane perpendicular to the first center line of curvature, a tangent line of an end of the arc-shaped structure surface close to the clearance surface is a first tangent line, and the clearance surface is located on a side of the first tangent line close to the first shielding plate. In this way, when the opening is a through hole, the clearance surface can prevent interference between the first housing and the first shielding plate and the first hinge member in a process in which the first shielding plate and the first hinge member rotate relative to each other; and when the opening is a blind hole, the clearance surface can prevent interference between a hole bottom wall of the blind hole and the first shielding plate and the first hinge member in a process in which the first shielding plate and the first hinge member rotate relative to each other. In addition, provision of the clearance surface enables overall thickness of the first shielding plate and the first matching part to be reduced, to further help reduce the thickness of the rotating shaft mechanism.

In a possible implementation of the first aspect of this application, an absolute value of a difference between a diameter of the first arc surface and that of the first arc sliding surface is greater than or equal to 0 and less than or equal to 2 mm. Therefore, it is beneficial to further reduce the overall thickness of the first hinge member and the first connecting structure, and achieve a design of a thin rotating shaft mechanism.

Specifically, the absolute value of the difference between the diameter of the first arc surface and that of the first arc sliding surface is greater than or equal to 0 and less than or equal to 1 mm.

In a possible implementation of the first aspect of this application, the first matching part has the first arc matching surface, a center line of curvature of the first arc matching surface is the first center line of curvature, a diameter of the first arc matching surface is the same as that of the first arc surface, and the first matching part is in sliding fit with the first arc surface via the first arc matching surface. Because the first arc matching surface and the first arc surface share a same center line of curvature and have a same diameter, a contact area between the first arc matching surface and the first arc surface is large, and reliability of sliding fit between the first arc matching surface and the first arc surface is high.

In a possible implementation of the first aspect of this application, the first connecting part has a first arc fitting surface, a center line of curvature of the first arc fitting surface is the first center line of curvature, a diameter of the first arc fitting surface is equal to that of the first arc sliding surface, and the first connecting part is in sliding fit with the first arc sliding surface via the first arc fitting surface. Because the first arc fitting surface and the first arc sliding surface share a same center line of curvature and have a same diameter, a contact area between the first arc fitting surface and the first arc sliding surface is large, and reliability of sliding fit between the first arc fitting surface and the first arc sliding surface is high.

Specifically, the limiting part projects from the first arc fitting surface.

In a possible implementation of the first aspect of this application, an orthographic projection of the entire first connecting part on the first shielding plate is located on the first shielding plate, and the structure is compact.

Specifically, on a circumferential direction of a cylindrical surface on which the first arc fitting surface is located, a surface of the first connecting part further includes a first plane and a second plane, and the first connecting part is fixed to the first shielding plate via the first plane. One end of the first plane is connected to one end of the second plane. The other end of the first plane and the other end of the second plane respectively extend toward directions away from each other and an included angle between the two planes is less than or equal to 90°. The first arc fitting surface is connected between the other end of the first plane and the other end of the second plane. Therefore, the structure is compact.

In a possible implementation of the first aspect of this application, the foldable electronic device includes a second housing. The rotating shaft mechanism further includes a second shielding plate and a second hinge member. The second shielding plate is provided with a second matching part and a second connecting part. The second hinge member is fixedly connected to the second housing, and the second hinge member is hingedly connected to another side of the base. The second hinge member is provided with a second connecting structure corresponding to the second matching part and the second connecting part on the second shielding plate. The second connecting structure is provided with a second arc surface and a second arc sliding surface. The second arc surface and the second arc sliding surface share a same center line of curvature, which is a second center line of curvature. The second arc surface and the second arc sliding surface are located on a same side of the second center line of curvature and have opposite orientations. The second arc surface and the second arc sliding surface are distributed in an extension direction of the second center line of curvature. The second center line of curvature is parallel to the first center line of curvature. When the foldable electronic device switches between the unfolded state and the folded state, the second matching part slides along the second arc surface, and the second connecting part slides along the second arc sliding surface.

In the foldable electronic device in this application, the second connecting structure is provided with the second arc surface and the second arc sliding surface, the second arc surface and the second arc sliding surface share a same center line of curvature, which is the second center line of curvature, and the second arc surface and the second arc sliding surface are located on a same side of the second center line of curvature. In this way, when the foldable electronic device switches between the unfolded state and the folded state, the second matching part slides along the second arc surface, and the second connecting part slides along the second arc sliding surface, so that the second shielding plate and the second hinge member can rotate relative to each other using the second center line of curvature as a rotation center line. In addition, because the second arc surface and the second arc sliding surface have opposite orientations, in a radial direction of the second arc surface, the second matching part and the second connecting part can be positionally limited between the second arc surface and the second arc sliding surface, or the second arc surface and the second arc sliding surface can be positionally limited between the second matching part and the second connecting part, so that reliability of fitting is high. In addition, the second arc surface and the second arc sliding surface are distributed in the extension direction of the second center line of curvature. In this way, the second arc surface and the second arc sliding surface are staggered in the radial direction of the second arc surface. Therefore, reliability of fitting between the second matching part and the second arc surface and reliability of fitting between the second connecting part and the second arc sliding surface are not limited by a radial distance between the second arc surface and the second arc sliding surface. In this way, it is beneficial to ensure that the second arc surface and the second arc sliding surface have large arc lengths and ensure that the second hinge member and the second shielding plate can fit reliably, to help reduce overall thickness of the second hinge member and the second connector by reducing a distance between the second arc surface and the second arc sliding surface in the radial direction of the second arc surface, so as to facilitate reduction of the thickness of the rotating shaft mechanism.

In a possible implementation of the first aspect of this application, the foldable electronic device includes a foldable screen. The foldable screen includes a first display part, a second display part, and a third display part. The third display part is connected between the first display part and the second display part. The first housing has a first support surface, and the second housing has a second support surface. The rotating shaft mechanism has a third support surface. The first display part is stacked on and fixed to the first support surface. The second display part is stacked on and fixed to the second support surface. The third display part is supported by the third support surface. In the unfolded state, the first display part, the third display part, and the second display part are sequentially arranged, and display surfaces of the first display part, the third display part, and the second display part are coplanar.

In this case, the foldable electronic device is an inward-foldable electronic device.

According to a second aspect, this application provides a foldable electronic device, including a rotating shaft mechanism and a first housing. The rotating shaft mechanism includes a base, a first shielding plate, and a first hinge member. The first shielding plate is provided with a first matching part and a first connecting part. The first hinge member is fixedly connected to the first housing, and the first hinge member is hingedly connected to one side of the base. The first hinge member is provided with a first connecting structure corresponding to the first matching part and the first connecting part on the first shielding plate. The first connecting structure is provided with a first arc surface. The first housing is provided with a first fixed structure. The first fixed structure is provided with a first arc-shaped surface. The first arc-shaped surface and the first arc surface share a same center line of curvature, which is a first center line of curvature. The first arc-shaped surface and the first arc surface are both located on a same side of the first center line of curvature and have opposite orientations. On at least one section of a switching path along which the foldable electronic device switches between an unfolded state and a folded state, the first matching part slides along the first arc surface, and the first connecting part slides along the first arc-shaped surface.

In the foldable electronic device in this application, because the first housing is fixedly connected to the first hinge member, in a manner in which the first matching part slides along the first arc surface and the first connecting part slides along the first arc-shaped surface, the first shielding plate and the first hinge member can rotate relative to each other using the first center line of curvature as a rotation center line. In addition, because the first arc surface and the first arc-shaped surface have opposite orientations, in a radial direction of the first arc surface, the first matching part and the first connecting part can be positionally limited between the first arc surface and the first arc-shaped surface, or the first arc surface and the first arc-shaped surface can be positionally limited between the first matching part and the first connecting part, so that reliability of fitting is high. In addition, providing the first arc-shaped surface on the first housing is beneficial to avoid providing, on the first hinge member, an arc-shaped surface that is used for sliding fit with the first connecting part, or reduce an arc length of the arc-shaped surface that is provided on the first hinge member and that is used for sliding fit with the first connecting part. In this way, it is beneficial to reduce thickness of the first hinge member, reduce thickness of the rotating shaft mechanism, and further achieve a design of a thin rotating shaft mechanism.

In a possible implementation of the second aspect of this application, the first arc-shaped surface is located on a side of the first arc surface away from the first center line of curvature, and faces the first arc surface. Therefore, a first arc-shaped sliding slot may be defined between the first arc surface and the first arc-shaped surface. When the foldable electronic device switches between the unfolded state and the folded state, the first connecting part and the first matching part are both located in the first arc-shaped sliding slot. In this way, the structure is simple, and reliability of fitting is higher. In addition, because the first arc-shaped surface is located on the side of the first arc surface away from the first center line of curvature, a diameter of the first arc-shaped surface is greater than a diameter of the first arc surface, and when the first shielding plate rotates by a same angle, a moving path of the first connecting part is inevitably longer than a moving path of the first matching part. In this case, the solution of proving the first arc-shaped surface on the first housing is more beneficial to optimize an arc length of the first arc-shaped surface, improve reliability of fitting between the first connecting part and the first arc-shaped surface, and improve reliability of fitting between the first hinge member and the first shielding plate.

In a possible implementation of the second aspect of this application, an arc-shaped sliding block is provided on the first shielding plate. Arc-shaped surfaces on two radial sides of the arc-shaped sliding block are respectively a first arc matching surface and a first arc fitting surface. The first matching part is the first arc matching surface. The first connecting part is the first arc fitting surface. The first arc matching surface and the first arc fitting surface share a same center line of curvature, which is the first center line of curvature. A diameter of the first arc matching surface is equal to a diameter of the first arc surface, and a diameter of the first arc fitting surface is equal to a diameter of the first arc-shaped surface. Therefore, a contact area between the first arc matching surface and the first arc surface is large, and reliability of sliding fit between the first arc matching surface and the first arc surface is high. In addition, a contact area between the first arc fitting surface and the first arc-shaped surface is large, and reliability of sliding fit between the first arc fitting surface and the first arc-shaped surface is high.

In a possible implementation of the second aspect of this application, in the unfolded state, an overlap width between the first arc fitting surface and the first arc-shaped surface is greater than or equal to 0.3 mm and less than or equal to 2 mm. Therefore, it is beneficial to further ensure both reliability of fitting between the first shielding plate and the first hinge member and a design of a thin rotating shaft mechanism.

In a possible implementation of the second aspect of this application, the first connecting structure is a through hole formed in the first hinge member, the first arc surface is formed on a wall of the through hole, and the first fixed structure is located in the through hole. Therefore, the structure is compact, and it is beneficial to reduce the overall thickness of the rotating shaft mechanism, and achieve a design of a thin rotating shaft mechanism.

In a possible implementation of the second aspect of this application, an end that is of the arc-shaped sliding block and that extends along an extension direction of the first center line of curvature is provided with a connecting rib, and the connecting rib is connected to the first shielding plate. Therefore, it is beneficial to improve connection strength between the arc-shaped sliding block and the first shielding plate.

To prevent the connecting rib from interfering with relative movement of the first shielding plate and the first hinge member, a clearance hole is provided on the first hinge member. The clearance hole is located at an end of the through hole in the extension direction of the first center line of curvature and is in communication with the through hole. The connecting rib passes through the clearance hole.

In view of this, to prevent interference between the connecting rib and the first hinge member, the clearance hole extends to an end of the first hinge member away from the base.

In a possible implementation of the second aspect of this application, the first arc-shaped surface and the first arc surface are distributed in the extension direction of the first center line of curvature. In this way, it is beneficial to further reduce overall thickness of the first hinge member and the first connecting structure by reducing a distance between the first arc surface and the first arc-shaped surface in the radial direction of the first arc surface, so as to further achieve reduction of the thickness of the rotating shaft mechanism.

In a possible implementation of the second aspect of this application, on the entire switching path along which the foldable electronic device switches between the unfolded state and the folded state, the first connecting part slides only along the first arc-shaped surface. In this case, the first hinge member does not need to be provided with another arc-shaped surface configured to be in sliding fit with the first connecting part, and this is beneficial to further reduce the thickness of the first hinge member, and reduce the thickness of the rotating shaft mechanism.

In a possible implementation of the second aspect of this application, the first connecting structure is provided with a first arc sliding surface, and the first arc sliding surface and the first arc-shaped surface share a same cylindrical surface. The first arc sliding surface is located on a side of the first arc-shaped surface that is on an arc-shaped extending trajectory of the first arc-shaped surface and that is close to the base. The first connecting part is in sliding fit with the first arc sliding surface. Therefore, it is beneficial to improve reliability of fitting between the first hinge member and the first shielding plate.

In a possible implementation of the second aspect of this application, the first arc sliding surface is formed on a wall of the through hole facing the first arc surface, and the first arc sliding surface and the first arc surface face each other. Therefore, it is beneficial to improve reliability of fitting between the first hinge member and the first shielding plate. In a possible implementation of the second aspect of this application, when the first arc-shaped surface and the first arc surface are distributed in the extension direction of the first center line of curvature, the first arc sliding surface and the first arc surface are also distributed in the extension direction of the first center line of curvature.

In view of this, for a specific manner in which the first arc sliding surface and the first arc surface are distributed in the extension direction of the first center line of curvature, reference may be made to any one of the technical solutions in the foregoing first aspect, and details are not described herein again.

In a possible implementation of the second aspect of this application, the first housing includes a first middle frame and a first connecting plate. The first middle frame has a first support surface. The first middle frame further has a first side surface facing the rotating shaft mechanism. The first connecting plate is on a side of the first middle frame close to the rotating shaft mechanism. The first connecting plate and the first support surface are at opposite ends of the first side surface. The first fixed structure is fixed to a surface that is of the first connecting plate and that has a same orientation as the first support surface, and is located at an end of the first connecting plate close to the first side surface. In this way, the first shielding plate and the first hinge member can be covered by the first connecting plate, so that the first connecting plate can be used to protect the part of the structure, aesthetics of an appearance can be improved, and structural compactness is better.

In a possible implementation of the second aspect of this application, the foldable electronic device includes a second housing. The second housing is provided with a second fixed structure. The second fixed structure is provided with a second arc-shaped surface. The rotating shaft mechanism further includes a second shielding plate and a second hinge member. The second shielding plate is provided with a second matching part and a second connecting part. The second hinge member is fixedly connected to the second housing, and the second hinge member is hingedly connected to another side of the base. The second hinge member is provided with a second connecting structure corresponding to the second matching part and the second connecting part on the second shielding plate. The second connecting structure is provided with a second arc surface. The second arc surface and the second arc-shaped surface share a same center line of curvature, which is a second center line of curvature. The second arc surface and the second arc-shaped surface are both located on a same side of the second center line of curvature and have opposite orientations. The second center line of curvature is parallel to the first center line of curvature. On at least one section of the switching path along which the foldable electronic device switches between the unfolded state and the folded state, the second matching part slides along the second arc surface, and the second connecting part slides along the second arc-shaped surface.

In the foldable electronic device in this application, because the second housing is fixedly connected to the second hinge member, in a manner in which the second matching part slides along the second arc surface and the second connecting part slides along the second arc-shaped surface, the second shielding plate and the second hinge member can rotate relative to each other using the second center line of curvature as a rotation center line. In addition, because the second arc surface and the second arc-shaped surface have opposite orientations, in a radial direction of the second arc surface, the second matching part and the second connecting part can be positionally limited between the second arc surface and the second arc-shaped surface, or the second arc surface and the second arc-shaped surface can be positionally limited between the second matching part and the second connecting part, so that reliability of fitting is high. In addition, providing the second arc-shaped surface on the second housing is beneficial to avoid providing, on the second hinge member, an arc-shaped surface that is used for sliding fit with the second connecting part, or reduce an arc length of the arc-shaped surface that is provided on the second hinge member and that is used for sliding fit with the second connecting part. In this way, it is beneficial to reduce thickness of the second hinge member, reduce the thickness of the rotating shaft mechanism, and further achieve a design of a thin rotating shaft mechanism.

In a possible implementation of the second aspect of this application, the foldable electronic device includes a foldable screen. The foldable screen includes a first display part, a second display part, and a third display part. The third display part is connected between the first display part and the second display part. The first housing has a first support surface, and the second housing has a second support surface. The rotating shaft mechanism has a third support surface. The first display part is stacked on and fixed to the first support surface. The second display part is stacked on and fixed to the second support surface. The third display part is supported by the third support surface. In the unfolded state, the first display part, the third display part, and the second display part are sequentially arranged, and display surfaces of the first display part, the third display part, and the second display part are coplanar.

In this case, the foldable electronic device is an inward-foldable electronic device.

### BRIEF DESCRIPTION OF DRAWINGS

FIG. 1 is a three-dimensional diagram of a foldable electronic device in an unfolded state according to an embodiment of this application;
FIG. 2 is a schematic exploded view of a foldable screen and a support apparatus in the foldable electronic device shown in FIG. 1;
FIG. 3 is a three-dimensional diagram when the foldable electronic device shown in FIG. 1 is in a folded state;
FIG. 4 is a cross-sectional view of the foldable electronic device shown in FIG. 1 along a line A-A;
FIG. 5 is a schematic diagram of a first housing shown in FIG. 4;
FIG. 6A is a schematic diagram of a rotating shaft mechanism shown in FIG. 4;
FIG. 6B is an exploded view of the rotating shaft mechanism shown in FIG. 6A;
FIG. 7 is a schematic cross-sectional view of the rotating shaft mechanism shown in FIG. 6A and FIG. 6B along a line B-B;
FIG. 8 is a schematic diagram of a rotating shaft mechanism in an unfolded state according to some other embodiments of this application;
FIG. 9 is a schematic diagram of the rotating shaft mechanism shown in FIG. 8 in a folded state;
FIG. 10 is a schematic diagram of a partial structure of a rotating shaft mechanism according to still some other embodiments of this application;
FIG. 11 is a schematic exploded view of the rotating shaft mechanism shown in FIG. 10;
FIG. 12 is an enlarged view of a part circled at a position C of the structure shown in FIG. 11;
FIG. 13 is an enlarged view of a part circled at a position D of the structure shown in FIG. 10;
FIG. 14 is a schematic partial view of fitting between a first shielding plate, a first matching part, and a first connecting part shown in FIG. 12 and FIG. 13;
FIG. 15 is a side view of the structure shown in FIG. 14;
FIG. 16 is a schematic diagram of a structure of a support apparatus in a folded state according to yet some embodiments of this application;
FIG. 17 is a schematic diagram of fitting between a first shielding plate, a first middle frame, and a first hinge member in a cross-sectional structure of the support apparatus shown in FIG. 16 along a line E-E;
FIG. 18 is an enlarged view of a part circled at a position F of the structure shown in FIG. 17;
FIG. 19 is a schematic partial view of a rotating shaft mechanism shown in FIG. 18 in a process of switching between an unfolded state and a folded state;
FIG. 20 is a schematic exploded view of a partial structure of the first shielding plate and the first hinge member shown in FIG. 17;
FIG. 21 is an assembly diagram of the partial structure of the first shielding plate and the first hinge member shown in FIG. 20;
FIG. 22 is a cross-sectional view of assembly of a first middle frame, a first hinge member, and a first shielding plate according to yet some other embodiments of this application;
FIG. 23 is an enlarged view of a part circled at a position H of the structure shown in FIG. 22;
FIG. 24 is a schematic partial view of a foldable electronic device that has the structure shown in FIG. 22 and that is in a process of switching between an unfolded state and a folded state; and
FIG. 25 is a schematic partial view of a foldable electronic device in a process of switching between an unfolded state and a folded state according to still yet some other embodiments of this application.

### DESCRIPTION OF EMBODIMENTS

In embodiments of this application, terms such as "example" or "for example" are used for representing giving an example, an illustration, or a description. Any embodiment or design scheme described as "example" or "for example" in embodiments of this application should not be explained as being more preferred or having more advantages than another embodiment or design scheme. In particular, use of the terms such as "example" or "for example" are intended to present a related concept in a specific manner.

In the descriptions of embodiments of this application, the term "and/or" means and covers any of and all possible combinations of one or more associated listed items. The term "and/or" describes an association relationship between associated objects and represents that three relationships may exist. For example, A and/or B may represent the following three cases: Only A exists, both A and B exist, and only B exists. In addition, the character "/" in this application generally represents an "or" relationship between the associated objects.

In the descriptions of embodiments of this application, unless otherwise specified and defined explicitly, the terms "mount", "connect", and "connection" should be understood in a broad sense. For example, "connection" may be a detachable connection or a non-detachable connection; or may be a direct connection or an indirect connection through an intermediate medium.

In the descriptions of embodiments of this application, the term "include", "comprise", or any other variant thereof is intended to cover non-exclusive inclusion, so that a process, method, item, or apparatus that includes a series of elements includes not only those elements but also other elements that are not explicitly listed, or includes elements inherent to such a process, method, item, or apparatus. Without more limitations, elements defined by a sentence "including a..." does not exclude that there are still other same elements in the process, method, item, or apparatus. Without more limitations, elements defined by a sentence "including a..." does not exclude that there are still other same elements in the process, method, item, or apparatus.

In the descriptions of embodiments of this application, the terms "coplanar", "collinear", "perpendicular", "parallel", and "equal" include the stated case and a case similar to the stated case. A range of the similar case is within an acceptable deviation range, and the acceptable deviation range is determined by a person of ordinary skill in the art while considering measurement in question and errors associated with measurement of a particular quantity (that is, limitations of a measurement system). For example, "collinear" indicates that being approximately collinear within a specific error range is allowed. The error range may be an angle deviation within 5°, 10°, or 15° relative to being absolutely collinear, or may be a spacing deviation of not greater than 0.05 mm, 0.1 mm, 0.2 mm, 0.5 mm, or 1 mm relative to being absolutely collinear. "Coplanar" indicates that being approximately coplanar within a specific error range is allowed. The error range may be an angle deviation within 5°, 10°, or 15° relative to being absolutely coplanar, or may be a section difference of not greater than 0.05 mm, 0.1 mm, 0.2 mm, 0.5 mm, or 1 mm relative to being absolutely coplanar. "Parallel" includes absolutely parallel and approximately parallel. An acceptable deviation range of the approximately parallel may be, for example, an angle deviation within 5°, 8°, or 10°. "Perpendicular" includes absolutely perpendicular and approximately perpendicular. An acceptable deviation range of the approximately perpendicular may alternatively be, for example, a deviation within 5°, 8°, or 10°. "Equal" includes absolutely equal and approximately equal. Being within an acceptable deviation range of approximately equal may be, for example, that a difference between two equal items is less than or equal to 5% of either of the two equal items.

A specific structure of a foldable electronic device in this application is described below in detail.

Embodiments of this application provide a foldable electronic device. The foldable electronic device may be various electronic devices that can change an unfolded form or a folded form of a foldable screen and an unfolded form or a folded form of the foldable electronic device. Specifically, the foldable electronic device may be user equipment (user equipment, UE), a terminal device (terminal), or the like. For example, the foldable electronic device may be a mobile phone, a tablet computer (portable android device, PAD), or a notebook computer. The foldable electronic device may alternatively be a foldable support.

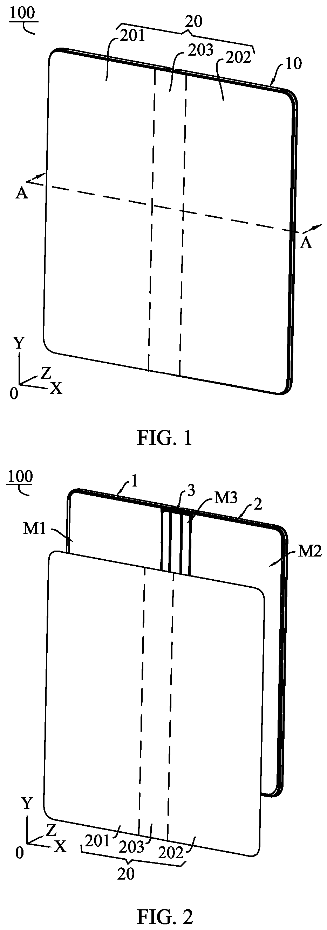

Refer to FIG. 1 and FIG. 2. FIG. 1 is a three-dimensional diagram of a foldable electronic device 100 in an unfolded state according to an embodiment of this application. FIG. 2 is a schematic exploded view of a foldable screen 20 and a support apparatus 10 in the foldable electronic device 100 shown in FIG. 1. In this embodiment, the foldable electronic device 100 is a mobile phone.

The foldable electronic device 100 is approximately in a shape of a rectangular flat plate in the unfolded state. To facilitate descriptions of the following embodiments, an XYZ coordinate system is established for the foldable electronic device 100 in the unfolded state. A width direction of the foldable electronic device 100 is defined as an X-axis direction. A length direction of the foldable electronic device 100 is defined as a Y-axis direction. A thickness direction of the foldable electronic device 100 is defined as a Z-axis direction. It may be understood that a coordinate system of the foldable electronic device 100 may be flexibly set based on actual needs, and is not specifically limited herein. In some other embodiments, a shape of the foldable electronic device 100 may alternatively be a shape of a square flat plate, a circular flat plate, an oval flat plate, or the like.

The foldable electronic device 100 includes the foldable screen 20 and the support apparatus 10.

It can be understood that FIG. 1 and FIG. 2 only schematically show some components included in the foldable electronic device 100, and actual shapes, actual sizes, actual positions, and actual structures of these components are not limited by FIG. 1 or FIG. 2.

The foldable screen 20 is configured to display information such as images and videos. The foldable screen 20 can switch between the unfolded state and a folded state. Specifically, still referring to FIG. 1 and FIG. 2, the foldable screen 20 may include a first display part 201, a second display part 202, and a third display part 203.

The third display part 203 is connected between the first display part 201 and the second display part 202.

Still refer to FIG. 1 and FIG. 2. When the foldable screen 20 is in the unfolded state, the first display part 201, the third display part 203, and the second display part 202 are sequentially arranged along the X-axis direction, and display surfaces of the first display part 201, the third display part 203, and the second display part 202 are coplanar. In some other embodiments, when the foldable screen 20 is in the unfolded state, the first display part 201, the third display part 203, and the second display part 202 may alternatively be sequentially arranged along the Y-axis direction. When the foldable screen 20 is in the unfolded state, large-screen display can be achieved, to provide richer information for a user and bring better use experience to the user.

At least the third display part 203 of the foldable screen 20 is of a flexible screen structure. In this way, the third display part 203 may be bent and deformed under an external force, so that the foldable screen 20 is folded from the unfolded state shown in FIG. 1 to the folded state. The first display part 201 and the second display part 202 of the foldable screen 20 each may be of a flexible screen structure, or may be of a rigid screen structure, or may be partially of a flexible screen structure and partially of a rigid screen structure. This is not specifically limited herein.

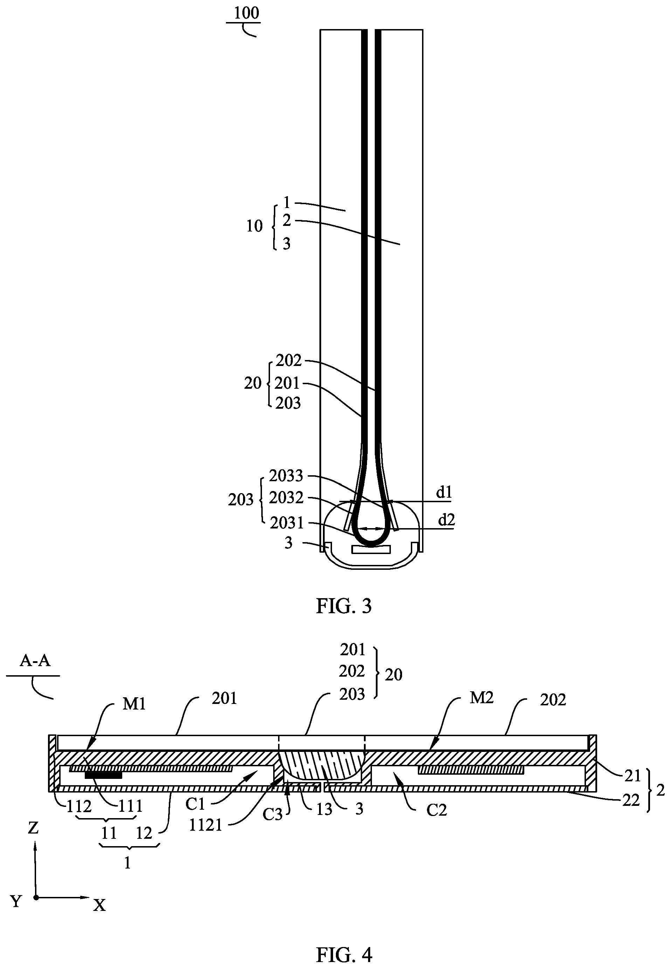

FIG. 3 is a three-dimensional diagram when the foldable electronic device 100 shown in FIG. 1 is in the folded state. The foldable screen 20 of the foldable electronic device 100 is also in the folded state. When the foldable screen 20 is in the folded state, the third display part 203 is bent, and the first display part 201 and the second display part 202 of the foldable screen 20 are parallel and opposite to each other.

When the foldable screen 20 is in the folded state, still referring to FIG. 3, the third display part 203 is folded into a water drop form. Specifically, the third display part 203 includes a first transition section 2032, a second transition section 2033, and an arc-shaped section 2031. The first transition section 2032 is connected between the arc-shaped section 2031 and the first display part 201. The second transition section 2033 is connected between the arc-shaped section 2031 and the second display part 202.

A distance between an end that is of the first transition section 2032 and that is connected to the first display part 201 and an end that is of the second transition section 2033 and that is connected to the second display part 202 is a first distance d1. A distance between an end that is of the first transition section 2032 and that is connected to the arc-shaped section 2031 and an end that is of the second transition section 2033 and that is connected to the arc-shaped section 2031 is a second distance d2. The second distance d2 is greater than the first distance d1. In this way, a bending radius of the third display part 203 can be larger, and bending of the third display part 203 is more natural when the foldable screen 20 is folded. This helps to reduce a crease of the foldable screen 20, and can reduce wear on the foldable screen 20, so that the foldable screen 20 is more durable. It may be understood that, when the foldable electronic device 100 is in the folded state, the third display part 203 may alternatively be folded into another shape based on actual needs. This is not limited in this application.

Still refer to FIG. 3. When the foldable screen 20 is in the folded state, for the foldable screen 20, the display surface of the first display part 201 and the display surface of the second display part 202 face each other, and the foldable screen 20 is invisible to the user. The support apparatus 10 protects the foldable screen 20 from the outside, to prevent the foldable screen 20 from being scratched by a hard object. The foldable electronic device 100 is an inward-foldable electronic device, and the foldable electronic device 100 has a reduced size and is convenient to carry. In another example, the foldable electronic device 100 may alternatively be an outward-foldable electronic device. For an outward-foldable electronic device, in the folded state, the support apparatus 10 is located between the first display part 201 and the second display part 202, and the display surface of the first display part 201 faces away from the display surface of the second display part 202.

The support apparatus 10 is configured to bear the foldable screen 20. Still refer to FIG. 2 and FIG. 3. The support apparatus 10 includes a first housing 1, a second housing 2, and a rotating shaft mechanism 3.

It may be understood that FIG. 2 and FIG. 3 only schematically show some components included in the support apparatus 10, and actual shapes, actual sizes, actual positions, and actual structures of these components are not limited by FIG. 3.

The first housing 1 has a first support surface M1. The first display part 201 is stacked on and fixed to the first support surface M1. For example, a connection relationship between the first support surface M1 and the first display part 201 includes but is not limited to gluing.

The second housing 2 has a second support surface M2. The second display part 202 is stacked on and fixed to the second support surface M2. For example, a connection relationship between the second support surface M2 and the second display part 202 includes but is not limited to gluing.

The rotating shaft mechanism 3 is connected between the first housing 1 and the second housing 2. The first housing 1 and the second housing 2 are configured to be rotatably connected via the rotating shaft mechanism 3. In this way, the first housing 1 and the second housing 2 can be folded or unfolded relative to each other, to further implement folding or unfolding of the foldable screen 20.

The rotating shaft mechanism 3 has a third support surface M3. The rotating shaft mechanism 3 may support the third display part 203 of the foldable screen 20 via the third support surface M3.

Specifically, still referring to FIG. 2, in the unfolded state, the first support surface M1 of the first housing 1, the second support surface M2 of the second housing 2, and the third support surface M3 of the rotating shaft mechanism 3 are coplanar and have a same orientation. Therefore, the foldable screen 20 can be reliably supported, to ensure flatness of the foldable screen 20.

In the folded state, still referring to FIG. 3, the first housing 1 and the second housing 2 are stacked and spaced apart, and the first support surface M1 of the first housing 1 and the second support surface M2 of the second housing 2 face each other, to hide the foldable screen 20 between the first housing 1 and the second housing 2, so as to protect the foldable screen 20.

FIG. 4 is a cross-sectional view of the foldable electronic device 100 shown in FIG. 1 along a line A-A. The first housing 1 may include a first middle frame 11 and a first back cover 12. The first middle frame 11 has the first support surface M1. The first back cover 12 is fixedly connected to a side of the first middle frame 11 away from the first display part 201. A first accommodating cavity C1 is formed between the first middle frame 11 and the first back cover 12. The first accommodating cavity C1 may be configured to accommodate electronic components such as a main board, a camera module, and a battery.

Similarly, the second housing 2 may include a second middle frame 22 and a second back cover 21. The second middle frame 21 has the second support surface M2. The second back cover 22 is fixedly connected to a side of the second middle frame 21 away from the second display part 202. A second accommodating cavity C2 is formed between the second middle frame 21 and the second back cover 22. The second accommodating cavity C2 may be configured to accommodate electronic components such as a sub-board, a speaker module, an element, and a battery.

In another example, the second housing 2 may not include a second back cover 22. In this case, the foldable electronic device 100 may include a secondary display screen (not shown in the figure). The secondary display screen may be fixedly connected to a side of the second middle frame 21 away from the second display part 202. A second accommodating cavity C2 is formed between the second middle frame 21 and the secondary display screen.

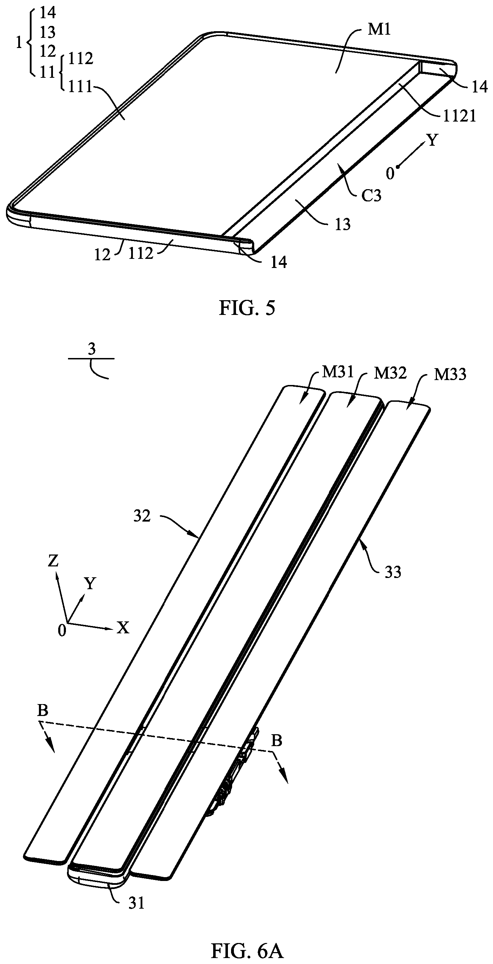

Still refer to FIG. 4, and refer to FIG. 5 together. FIG. 5 is a schematic diagram of the first housing 1 shown in FIG. 4. The first middle frame 11 includes a first middle plate 111 and a first side frame 112.

The first middle plate 111 and the first back cover 12 are stacked and spaced apart. The first middle plate 111 has the first support surface M1. The first side frame 112 is disposed around a periphery of the first middle plate 111, and is fixedly connected to the first middle plate 111 and the first back cover 12, to define the first accommodating cavity C1 with the first middle plate 111 and the first back cover 12.

The first housing 1 further includes two first extension plates 14 and a first connecting plate 13.

The two first extension plates 14 are located on a side of the first middle frame 11 close to the rotating shaft mechanism 3. The two first extension plates 14 are connected to two ends of the first middle frame 11 in the Y-axis direction in one-to-one correspondence, and the two first extension plates 14 are disposed opposite to each other in the Y-axis direction.

Still refer to FIG. 4 and FIG. 5. The first side frame 112 has a first side surface 1121 facing the rotating shaft mechanism 3.

The first connecting plate 13 is located on the side of the first middle frame 11 close to the rotating shaft mechanism 3. The first connecting plate 13 is connected to an end of the first side surface 1121 away from the first support surface M1. The first connecting plate 13 is connected between the two first extension plates 14. The first connecting plate 13, the two first extension plates 14, and the first side surface 1121 define a fixed space C3. A part of the rotating shaft mechanism 3 is located in the fixed space C3. Therefore, this helps to fix the rotating shaft mechanism 3, and can improve a hide effect of the rotating shaft mechanism 3.

Specifically, to simplify a processing process of the first housing 1, reduce manufacturing costs, and improve structural strength of the first housing 1, the first middle frame 11, the first extension plates 14, and the first connecting plate 13 forms an integrally formed piece. In another example, the first middle frame 11 and the first extension plates 14, the first middle frame 11 and the first connecting plate 13, and the first connecting plate 13 and the first extension plates 14 may alternatively be connected by gluing, welding, clamping, screwing, or the like.

Similarly, a fixed space may alternatively be formed on the second housing 2, to accommodate another part of the rotating shaft mechanism 3. For a structure of the second housing 2, refer to the first housing 1. Details are not described herein again.

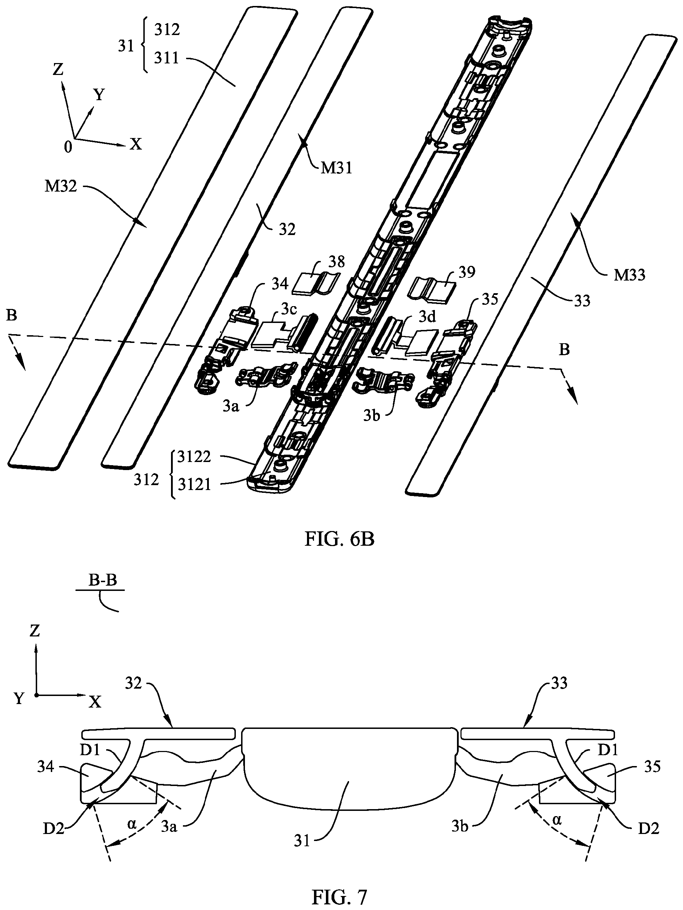

Refer to FIG. 6A and FIG. 6B. FIG. 6A is a schematic diagram of the rotating shaft mechanism 3 shown in FIG. 4. The third support surface M3 on the rotating shaft mechanism 3 includes a first support sub-surface M31, a second support sub-surface M32, and a third support sub-surface M33.

Still refer to FIG. 6A and FIG. 6B. FIG. 6B is an exploded view of the rotating shaft mechanism 3 shown in FIG. 6A. The rotating shaft mechanism 3 includes a base 31, a first shielding plate 32, a first hinge member 34, a first primary swing arm 3a, a first secondary swing arm 3c, a first shielding plate swing arm 38, a second shielding plate 33, a second hinge member 35, a second primary swing arm 3b, a second secondary swing arm 3d, and a second shielding plate swing arm 39.

FIG. 6A and FIG. 6B only schematically show some components included in the rotating shaft mechanism 3, and actual shapes, actual sizes, actual positions, and actual structures of these components are not limited by FIG. 6A and FIG. 6B.

The base 31 may provide a mounting base for other components or parts of the rotating shaft mechanism 3. For the base 31, a length direction is parallel to the Y-axis direction, a width direction is parallel to the X-axis direction, and a thickness direction is parallel to the Z-axis direction.

Still refer to FIG. 6B. The base 31 includes a support plate 311 and a shaft cover 312.

The support plate 311 is in a shape of a flat plate. The support plate 311 has the second support sub-surface M32. The second support sub-surface M32 is configured to support the foregoing arc-shaped section 2031.

The shaft cover 312 is disposed on a side of the support plate 311 away from the second support sub-surface M32.

Refer to FIG. 6B. The shaft cover 312 includes a bottom plate 3121 and a side plate 3122. The side plate 3122 surrounds an outer periphery of the bottom plate 3121. An accommodating space is defined between the side plate 3122 and the bottom plate 3121. Some components and parts of the rotating shaft mechanism 3 may be accommodated in the accommodating space. In this way, some components and parts of the rotating shaft mechanism 3 can be hidden inside the shaft cover 312, to improve appearance aesthetics of the foldable electronic device 100.

The first hinge member 34 is fixed to the first housing 1. Specifically, the first hinge member 34 is fixed to the first middle frame 11. In another example, the first hinge member 34 may alternatively be fixed to the first back cover 12. A manner of connecting the first hinge member 34 and the first housing 1 includes but is not limited to gluing, welding, clamping, or screwing.

The first hinge member 34 is slidably and rotatably connected to one side of the base 31. As shown in FIG. 6B, the first hinge member 34 is slidably and rotatably connected to one side of the base 31 via the first primary swing arm 3a. Specifically, one end of the first primary swing arm 3a slides and rotates on the base 31, and a rotation axis relative to the base 31 extends along the Y-axis direction. The first hinge member 34 is hingedly connected to the other end of the first primary swing arm 3a, and the first hinge member 34 extends along the Y-axis direction relative to a hinge axis of the first primary swing arm 3a.

The first secondary swing arm 3c and the first hinge member 34 are located on a same side of the base 31. The first secondary swing arm 3c is hingedly connected to one side of the base 31. A hinge axis of the first secondary swing arm 3c relative to the base 31 extends along the Y-axis direction. The first secondary swing arm 3c and the first primary swing arm 3a are arranged in the Y-axis direction. A hinge axis of the first primary swing arm 3a relative to the base 31 is parallel to the hinge axis of the first secondary swing arm 3c relative to the base 31. When the rotating shaft mechanism 3 switches between the unfolded state and the folded state, the first secondary swing arm 3c and the first hinge member 34 may slide relative to each other in a direction perpendicular to a Y axis.

The first shielding plate 32 has the first support sub-surface M31. The first shielding plate 32 fixes and supports the foregoing first transition section 2032 via the first support sub-surface M31. For example, a manner of connecting the first shielding plate 32 and the first transition section 2032 includes but is not limited to gluing.

The first shielding plate 32 is slidably and rotatably connected to the first hinge member 34. A rotation axis of the first shielding plate 32 relative to the first hinge member 34 extends along the Y-axis direction.

The first shielding plate swing arm 38 is slidably and rotatably connected to one side of the base 31. The first shielding plate swing arm 38 and the first hinge member 34 are located on a same side of the base 31, and are distributed in the Y-axis direction. When the rotating shaft mechanism switches between the unfolded state and the folded state, the first shielding plate 32 and the first shielding plate swing arm 38 slide relative to each other in the direction perpendicular to the Y axis.

To improve reliable support of the first support sub-surface M31 for the first transition section 2032, the first hinge member 34, the first primary swing arm 3a, the first secondary swing arm 3c, and the first shielding plate swing arm 38 are all located on a side of the first shielding plate 32 away from the first support sub-surface M31.

The second hinge member 35 is fixed to the second housing 2. Specifically, the second hinge member 35 is fixed to the second middle frame 21. In another example, the second hinge member 35 may alternatively be fixed to the second back cover 22. A manner of connecting the second hinge member 35 and the second housing 2 includes but is not limited to gluing, welding, clamping, or screwing.

The second hinge member 35 is slidably and rotatably connected to another side of the base 31. The second hinge member 35 is slidably and rotatably connected to the another side of the base 31 via the second primary swing arm 3b. Specifically, one end of the second primary swing arm 3b is slidably and rotatably connected to the base 31, and a rotation axis relative to the base 31 extends along the Y-axis direction. The second hinge member 35 is hingedly connected to the other end of the second primary swing arm 3b, and the second hinge member 35 extends along the Y-axis direction relative to a hinge axis of the second primary swing arm 3b.

The second secondary swing arm 3d and the second hinge member 35 are located on a same side of the base 31. The second secondary swing arm 3d is hingedly connected to another side of the base 31. A hinge axis of the second secondary swing arm 3d relative to the base 31 extends along the Y-axis direction. The second secondary swing arm 3d and the second primary swing arm 3b are arranged in the Y-axis direction. A hinge axis of the second primary swing arm 3b relative to the base 31 is parallel to the hinge axis of the second secondary swing arm 3d relative to the base 31. When the rotating shaft mechanism 3 switches between the unfolded state and the folded state, the second secondary swing arm 3d and the second hinge member 35 may slide relative to each other in the direction perpendicular to a Y axis.

The second shielding plate 33 has the third support sub-surface M33. The second shielding plate 33 fixes and supports the foregoing second transition section 2033 via the third support sub-surface M33. For example, a manner of connecting the second shielding plate 33 and the second transition section 2033 includes but is not limited to gluing.

The second shielding plate 33 is slidably and rotatably connected to the second hinge member 35. A rotation axis of the second shielding plate 33 relative to the second hinge member 35 extends along the Y-axis direction.

The second shielding plate swing arm 39 is slidably and rotatably connected to another side of the base 31. The second shielding plate swing arm 39 and the second hinge member 35 are located on a same side of the base 31, and are distributed in the Y-axis direction. When the rotating shaft mechanism switches between the unfolded state and the folded state, the second shielding plate 33 and the second shielding plate swing arm 39 slide relative to each other in the direction perpendicular to the Y axis.

To improve reliable support of the third support sub-surface M33 for the second transition section 2033, the second hinge member 35, the second primary swing arm 3b, the second secondary swing arm 3d, and the second shielding plate swing arm 39 are all located on a side of the second shielding plate 33 away from the third support sub-surface M33.

It can be found from the foregoing descriptions that the first hinge member 34, the first primary swing arm 3a, the first shielding plate 32, the first shielding plate swing arm 38, the first secondary swing arm 3c, and the base 31 may form a link mechanism, and similarly, the second hinge member 35, the second primary swing arm 3b, the second shielding plate 33, the second shielding plate swing arm 39, the second secondary swing arm 3d, and the base 31 may also form a link mechanism. When the first housing 1 rotates under an external force, because the first hinge member 34 is fixedly connected to the first housing 1, the action force at the first housing 1 may be transferred to the first hinge member 34, and when the action force acting on the first hinge member 34 causes the first hinge member 34 to rotate relative to the base 31, a mechanical linkage is generated between the first secondary swing arm 3c, the first primary swing arm 3a, the first shielding plate swing arm 38, the first shielding plate 32, and the like. Similarly, when the second housing 2 rotates under an external force, because the second hinge member 35 is fixedly connected to the second housing 2, the action force at the second housing 2 may be transferred to the second hinge member 35, and when the action force acting on the second hinge member 35 causes the second hinge member 35 to rotate relative to the base 31, a mechanical linkage is generated between the second secondary swing arm 3d, the second primary swing arm 3b, the second shielding plate swing arm 39, the second shielding plate 33, and the like. In this way, the rotating shaft mechanism 3 can be folded and unfolded, and the foldable electronic device 100 can be folded and unfolded.

In the folded state, the first support surface M1 of the first housing 1 and the second support surface M2 of the second housing 2 are both perpendicular to the second support sub-surface M32 of the base 31, and an included angle between the first support sub-surface M31 of the first shielding plate 32 and the second support sub-surface M32 of the base 31 and an included angle between the third support sub-surface M33 of the second shielding plate 33 and the second support sub-surface M32 of the base 31 are both less than 90°. In this way, the foldable screen 20 can be folded into a shape of a water drop.

To implement the hinging between the first shielding plate 32 and the first hinge member 34 and the hinging between the second shielding plate 33 and the second hinge member 35, refer to FIG. 7. FIG. 7 is a schematic cross-sectional view of the rotating shaft mechanism 3 shown in FIG. 6A and FIG. 6B along a line B-B. A surface of the first shielding plate 32 facing the first hinge member 34 and a surface of the second shielding plate 33 facing the second hinge member 35 are each provided with an arc-shaped sliding block structure D1. A center line of curvature of the arc-shaped sliding block structure D1 extends along the Y-axis direction. The first hinge member 34 and the second hinge member 35 are each provide with an arc-shaped sliding slot structure D2. The arc-shaped sliding block structure D1 on the first shielding plate 32 is provided in and in sliding fit with the arc-shaped sliding slot structure D2 of the first hinge member 34. The arc-shaped sliding block structure D1 on the second shielding plate 33 is provided in and in sliding fit with the arc-shaped sliding slot structure D2 of the second hinge member 35.

In this example, values of a central angle α corresponding to the arc-shaped sliding slot structure D2 and a central angle α corresponding to the arc-shaped sliding block structure D1 range from 40° to 180°. In this way, it is beneficial to ensure that the arc-shaped sliding block structure D1 and the arc-shaped sliding slot structure D2 have large arc lengths, so that in a process in which the rotating shaft mechanism 3 switches between the unfolded state and the folded state, the arc-shaped sliding slot structure D2 can well guide the arc-shaped sliding block structure D1, to improve reliability of relative rotation between the shielding plate and the hinge member.

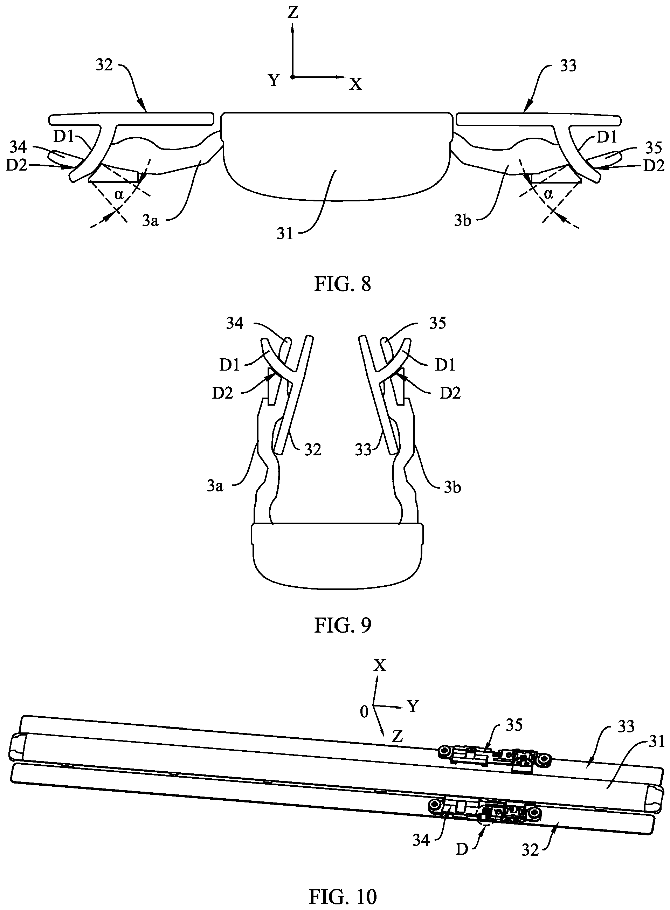

With increasingly strong demands on reduction of thickness of electronic devices, demands on reduction of thickness of the rotating shaft mechanism 3 increase. To achieve reduction of the thickness of the rotating shaft mechanism 3, the first hinge member 34 needs to be thinned. In this way, the rotating shaft mechanism 3 shown in FIG. 8 and FIG. 9 can be obtained. FIG. 8 is a schematic diagram of the rotating shaft mechanism 3 in the unfolded state according to some other embodiments of this application. FIG. 9 is a schematic diagram of the rotating shaft mechanism 3 shown in FIG. 8 in the folded state. Although reduction of thickness the hinge members (the first hinge member 34 and the second hinge member 35) in the Z direction facilitates reduction of the thickness of the rotating shaft mechanism 3, this may cause an excessively small thickness size of the first hinge member 34 and insufficient space for provision of the arc-shaped sliding slot structure D2, and consequently, the arc length of the arc-shaped sliding slot structure D2 is reduced. For example, the central angle α corresponding to the arc-shaped sliding slot structure D2 is less than 40° or less than 30°. The arc length of the arc-shaped sliding slot structure D2 is reduced, resulting in an insufficient limiting space of the arc-shaped sliding slot structure D2 for limiting the arc-shaped sliding block structure D1. In the process in which the rotating shaft mechanism 3 switches between the unfolded state and the folded state, the arc-shaped sliding slot structure D2 cannot well guide the arc-shaped sliding block structure D1, and the arc-shaped sliding block structure D1 cannot move according to a preset trajectory. Consequently, reliability of sliding fit between the shielding plate and the hinge member is reduced, and reliability of opening and closing of the rotating shaft mechanism 3 is reduced.

To not affect reliability of fitting between the shielding plate and the hinge member while achieving reduction of the thickness of the rotating shaft mechanism 3, the rotating shaft mechanism 3 in embodiments of this application is described below by using different examples (Example 1 and Example 2).

### Example 1

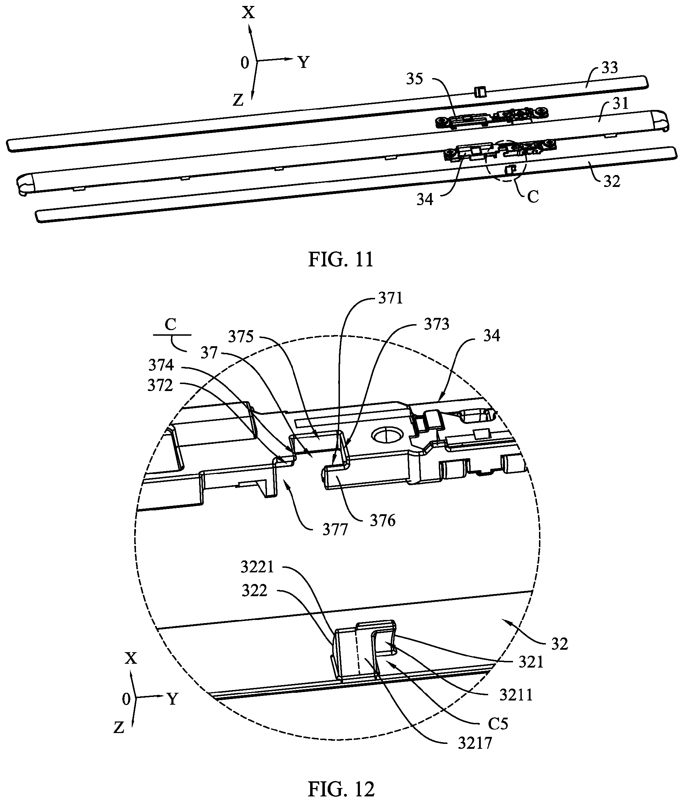

Refer to FIG. 10, FIG. 11, and FIG. 12. FIG. 10 is a schematic diagram of a partial structure of the rotating shaft mechanism 3 according to still some other embodiments of this application. FIG. 11 is a schematic exploded view of the rotating shaft mechanism 3 shown in FIG. 10. FIG. 12 is an enlarged view of a part circled at a position C of the structure shown in FIG. 11. A viewing angle shown in FIG. 10 and FIG. 11 is a viewing angle of a side of the rotating shaft mechanism 3 facing away from the third display part 203. Differences between these embodiments and the foregoing embodiments lie in the following:
The first shielding plate 32 is provided with a first matching part 321 and a first connecting part 322. The first hinge member 34 is provided with a first connecting structure 37.

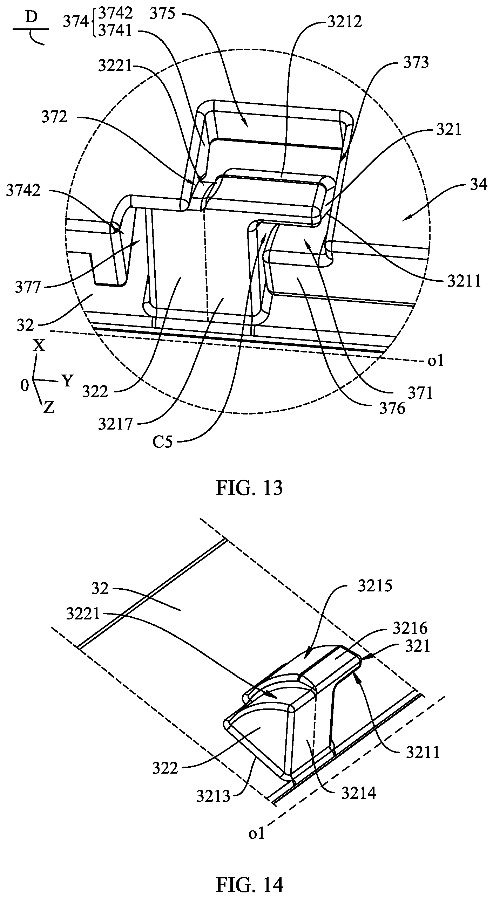

Still refer to FIG. 12, and refer to FIG. 13 together. FIG. 13 is an enlarged view of a part circled at a position D of the structure shown in FIG. 10. The first connecting structure 37 is provided with a first arc surface 371 and a first arc sliding surface 372.

The first arc surface 371 and the first arc sliding surface 372 share a same center line of curvature, which is a first center line of curvature o1. The first center line of curvature o1 extends along the Y-axis direction. The first arc surface 371 and the first arc sliding surface 372 are located on a same side of the first center line of curvature o1.

The first arc surface 371 and the first arc sliding surface 372 have opposite orientations. To be specific, one of the first arc surface 371 and the first arc sliding surface 372 faces the first center line of curvature o1, and the other of the first arc surface 371 and the first arc sliding surface 372 faces away from the first center line of curvature o1. Specifically, when the first arc surface 371 faces the first center line of curvature o1, the first arc sliding surface 372 faces away from the first center line of curvature o1; and when the first arc surface 371 faces away from the first center line of curvature o1, the first arc sliding surface 372 faces the first center line of curvature o1. In specific examples shown in FIG. 12 and FIG. 13, the first arc surface 371 faces away from the first center line of curvature o1, and the first arc sliding surface 372 faces the first center line of curvature o1.

The first arc surface 371 and the first arc sliding surface 372 both arch toward a side on which the base 31 is located. In another example, when the foldable electronic device 100 is an outward-foldable electronic device, the first arc surface 371 and the first arc sliding surface 372 arch toward a side away from the base 31.

An extension path of the first arc surface 371 may be a major arc (that is, an arc with a central angle greater than 180°), a minor arc (that is, an arc with a central angle less than 180°), or a semi-circular arc (that is, an arc with a central angle equal to 180°). This is not specifically limited herein. Similarly, an extension path of the first arc sliding surface 372 may be a major arc (that is, an arc with a central angle greater than 180°), a minor arc (that is, an arc with a central angle less than 180°), or a semi-circular arc (that is, an arc with a central angle equal to 180°). This is not specifically limited herein.

Still refer to FIG. 12 and FIG. 13. When the foldable electronic device 100 switches between the unfolded state and the folded state, the first matching part 321 slides along the first arc surface 371, and the first connecting part 322 slides along the first arc sliding surface 372. In this way, the first shielding plate 32 and the first hinge member 34 can rotate relative to each other using the first center line of curvature o1 as a rotation center line. In addition, because the first arc surface 371 and the first arc sliding surface 372 have opposite orientations, in a radial direction of the first arc surface 371, the first matching part 321 and the first connecting part 322 can be positionally limited between the first arc surface 371 and the first arc sliding surface 372, or the first arc surface 371 and the first arc sliding surface 372 can be positionally limited between the first matching part 321 and the first connecting part 322, so that reliability of fitting is high.

Still refer to FIG. 12 and FIG. 13. The first matching part 321 and the first connecting part 322 are distributed in the Y-axis direction. The first arc surface 371 and the first arc sliding surface 372 are distributed along the Y-axis direction. In this way, the first arc surface 371 and the first arc sliding surface 372 are staggered in the radial direction of the first arc surface 371. Therefore, reliability of fitting between the first matching part 321 and the first arc surface 371 and reliability of fitting between the first connecting part 322 and the first arc sliding surface 372 are not limited by a radial distance between the first arc surface 371 and the first arc sliding surface 372. In this way, it is beneficial to ensure that the first arc surface 371 and the first arc sliding surface 372 have large arc lengths and ensure that the first hinge member 34 and the first shielding plate 32 can fit reliably, to help reduce an overall size of the first hinge member 34 and the first connecting structure 37 in the Z direction by reducing a distance between the first arc surface 371 and the first arc sliding surface 372 in the radial direction of the first arc surface 371, so as to facilitate reduction of the thickness of the rotating shaft mechanism 3.

It should be noted that "the first arc surface 371 and the first arc sliding surface 372 are distributed in the Y-axis direction" means that the first arc surface 371 and the first arc sliding surface 372 may be spaced apart in the Y-axis direction or may be not spaced apart in the Y-axis direction. Similar descriptions should be used for same understanding below. Details are not described again. In specific examples shown in FIG. 12 and FIG. 13, the first arc surface 371 and the first arc sliding surface 372 are spaced apart in the Y-axis direction.

A diameter of the first arc surface 371 may be greater than a diameter of the first arc sliding surface 372. The diameter of the first arc surface 371 may be less than the diameter of the first arc sliding surface 372. The diameter of the first arc surface 371 may be equal to the diameter of the first arc sliding surface 372. In view of this, to further reduce the overall size of the first hinge member 34 and the first connecting structure 37 in the Z direction and achieve a design of a thin rotating shaft mechanism 3, an absolute value of a difference between the diameter of the first arc surface 371 and that of the first arc sliding surface 372 is greater than or equal to 0 and less than or equal to 2 mm. For example, the absolute value of the difference between the diameter of the first arc surface 371 and that of the first arc sliding surface 372 is 0, 0.1 mm, 0.2 mm, 0.3 mm, 0.4 mm, 0.5 mm, 0.6 mm, 0.7 mm, 0.8 mm, 0.9 mm, 1.1 mm, 1.2 mm, 1.3 mm, 1.4 mm, 1.5 mm, 1.6 mm, 1.7 mm, 1.8 mm, or 1.9 mm. In another example, the absolute value of the difference between the diameter of the first arc surface 371 and that of the first arc sliding surface 372 may be greater than 2 mm. For example, the absolute value is 2.5 mm or 3 mm.

Still refer to FIG. 12 and FIG. 13. The first connecting structure 37 is an opening formed on the first hinge member 34. In specific examples shown in FIG. 12 and FIG. 13, the opening is a through hole. The through hole extends from an end of the first hinge member 34 facing the first shielding plate 32 to an end of the first hinge member 34 facing away from the first shielding plate 32. In another example, the opening may alternatively be a blind hole. The blind hole is recessed from the end of the first hinge member 34 facing the first shielding plate 32 toward a surface of the first hinge member 34 facing away from the first shielding plate 32, provided that an end of the opening is open toward the first shielding plate 32.

The first arc surface 371 and the first arc sliding surface 372 are both formed in the opening. It should be noted that "the first arc surface 371 is formed in the opening" means that the first arc surface 371 is completely located in the opening or may be partially located in the opening. Similarly, that "the first arc sliding surface 372 is formed in the opening" means that the first arc sliding surface 372 is completely located in the opening or may be partially located in the opening.

The first matching part 321 projects from the first shielding plate 32. Specifically, the first matching part 321 is disposed on a surface of the first shielding plate 32 facing away from the first support sub-surface M31 and projects from the surface.

The first matching part 321 and the first shielding plate 32 may be an integral structure. In other words, the first matching part 321 and the first shielding plate 32 may be an integrally formed piece. In this way, it is beneficial to improve connection strength between the first matching part 321 and the first shielding plate 32, simplify a processing process, and reduce manufacturing costs. In another example, a manner of connecting the first matching part 321 and the first shielding plate 32 may alternatively be gluing, welding, clamping, or screwing.

The first connecting part 322 projects from the first shielding plate 32. Specifically, the first connecting part 322 is disposed on the surface of the first shielding plate 32 facing away from the first support sub-surface M31 and projects from the surface.

The first connecting part 322 and the first shielding plate 32 may be an integral structure. In other words, the first connecting part 322 and the first shielding plate 32 may be an integrally formed piece. In this way, it is beneficial to improve connection strength between the first connecting part 322 and the first shielding plate 32, simplify a processing process, and reduce manufacturing costs. In another example, a manner of connecting the first connecting part 322 and the first shielding plate 32 may alternatively be gluing, welding, clamping, or screwing.

In view of this, the first connecting part 322 may be connected to the first matching part 321. Specifically, the first connecting part 322 and the first matching part 321 may be an integral structure. In other words, the first connecting part 322 and the first matching part 321 may be an integrally formed piece. In this way, it is beneficial to improve connection strength between the first connecting part 322 and the first matching part 321, simplify a processing process, and reduce manufacturing costs. In another example, a manner of connecting the first connecting part 322 and the first matching part 321 may alternatively be gluing, welding, clamping, or screwing. Alternatively, in another example, the first connecting part 322 and the first matching part 321 may be spaced apart.

The first matching part 321 may extend into the opening to fit with the first arc surface 371. The first connecting part 322 may extend into the opening to fit with the first arc sliding surface 372. In this way, the structure is compact, and the rotating shaft mechanism 3 has a small volume.

It is clear that this application is not limited thereto. In another example, the first matching part 321 and the first connecting part 322 may alternatively be an opening structure disposed on the first shielding plate 32. The first connecting structure 37 is a structure projecting from the first hinge member 34. The first arc surface 371 and the first arc sliding surface 372 on the first connecting structure 37 extend into the opening structure.

Still refer to FIG. 12 and FIG. 13. The opening has a first side wall surface 373, a second side wall surface 374, and a third side wall surface 375.

In an extension direction of the first center line of curvature o1, the first side wall surface 373 and the second side wall surface 374 face each other. The third side wall surface 375 is connected between an end of the first side wall surface 373 close to the base 31 and an end of the second side wall surface 374 close to the base 31.

An end of the first side wall surface 373 away from the third side wall surface 375 is provided with a raised part 376 extending toward the second side wall surface 374. The first matching part 321 is located between the raised part 376 and the third side wall surface 375. The first arc surface 371 is formed on a surface of the raised part 376 facing the first matching part 321. Therefore, the structure is simple.

Still refer to FIG. 12 and FIG. 13. The first matching part 321 has a first arc matching surface 3211. An extension path of the first arc matching surface 3211 may be a major arc (that is, an arc with a central angle greater than 180°), a minor arc (that is, an arc with a central angle less than 180°), or a semi-circular arc (that is, an arc with a central angle equal to 180°). This is not specifically limited herein. In the embodiments shown in FIG. 12 and FIG. 13, the extension path of the first arc matching surface 3211 is a minor arc.

A center line of curvature of the first arc matching surface 3211 is the first center line of curvature o1. A diameter of the first arc matching surface 3211 is equal to that of the first arc surface 371. When the foldable electronic device 100 switches between the unfolded state and the folded state, the first matching part 321 slides along the first arc surface 371 via the first arc matching surface 3211. Because the first arc matching surface 3211 and the first arc surface 371 share a same center line of curvature and have a same diameter, a contact area between the first arc matching surface 3211 and the first arc surface 371 is large, and reliability of sliding fit between the first arc matching surface 3211 and the first arc surface 371 is high.

Still refer to FIG. 12 and FIG. 13. A limiting space C5 is formed between the first shielding plate 32 and a side of the first matching part 321 that the first arc matching surface 3211 faces. The raised part 376 is located in the limiting space C5. Therefore, the entire structure is simple and compact, and this is beneficial to reduce the thickness of the rotating shaft mechanism 3, so as to achieve reduction of the thickness of the rotating shaft mechanism 3.

It may be understood that, in another example, the first matching part 321 may alternatively not be provided with the first arc matching surface 3211.

Still refer to FIG. 12 and FIG. 13. The second side wall surface 374 includes a first region 3741 and a second region 3742. The second region 3742 is recessed relative to the first region 3741 toward a direction away from the first side wall surface 373 to define a recess 377. The first connecting part 322 is located in the recess 377. The first arc sliding surface 372 is formed on a side wall of the recess 377. Therefore, the structure is simple and compact, and this is beneficial to reduce the thickness of the rotating shaft mechanism 3, so as to achieve reduction of the thickness of the rotating shaft mechanism 3.

Still refer to FIG. 12 and FIG. 13. The first connecting part 322 has a first arc fitting surface 3221. An extension path of the first arc fitting surface 3221 may be a major arc (that is, an arc with a central angle greater than 180°), a minor arc (that is, an arc with a central angle less than 180°), or a semi-circular arc (that is, an arc with a central angle equal to 180°). This is not specifically limited herein. In the embodiments shown in FIG. 12 and FIG. 13, the extension path of the first arc fitting surface 3221 is a minor arc.

A center line of curvature of the first arc fitting surface 3221 is the first center line of curvature o1. A diameter of the first arc fitting surface 3221 is equal to that of the first arc sliding surface 372. When the foldable electronic device 100 switches between the unfolded state and the folded state, the first connecting part 322 slides along the first arc sliding surface 372 via the first arc fitting surface 3221. Because the first arc fitting surface 3221 and the first arc sliding surface 372 share a same center line of curvature and have a same diameter, a contact area between the first arc fitting surface 3221 and the first arc sliding surface 372 is large, and reliability of sliding fit between the first arc fitting surface 3221 and the first arc sliding surface 372 is high.

It may be understood that, in another example, the first connecting part 322 may alternatively not be provided with the first arc fitting surface 3221.

Still refer to FIG. 12 and FIG. 13. The first matching part 321 has a limiting part 3212 projecting from the first arc fitting surface 3221. In the extension direction of the first center line of curvature o1, the limiting part 3212 is positionally limited between the first side wall surface 373 and the first region 3741. In this way, it is beneficial to limit the first matching part 321 together with the first connecting part 322 at the opening, and it is also beneficial to limit the first shielding plate 32 and the first hinge member 34 in the Y-axis direction, to prevent relative movement of the first shielding plate 32 and the first hinge member 34 in the Y-axis direction, so as to improve reliability of fitting between the first shielding plate 32 and the first hinge member 34.

In another example, the first matching part 321 may alternatively not be provided with the limiting part 3212. For example, a surface of the first matching part 321 facing away from the first arc surface 371 is flush with the first arc fitting surface 3221, and the surface and the first arc fitting surface 3221 share a same cylindrical surface.

Still refer to FIG. 12 and FIG. 13. An end of the first arc matching surface 3211 close to the first connecting part 322 is provided with a connecting rib 3217. The connecting rib 3217 is separately connected to the first shielding plate 32 and the first connecting part 322. In this way, it is beneficial to improve overall structural strength of the first matching part 321, the first connecting part 322, and the first shielding plate 32.

In view of this, the connecting rib 3217 together with the first connecting part 322 are positionally limited between a bottom wall of the recess 377 and the raised part 376. In this way, it is beneficial to limit the first matching part 321 together with the first connecting part 322 at the opening, and it is also beneficial to limit the first shielding plate 32 and the first hinge member 34 in the Y-axis direction, to prevent relative movement of the first shielding plate 32 and the first hinge member 34 in the Y-axis direction, so as to improve reliability of fitting between the first shielding plate 32 and the first hinge member 34. In addition, matching with the foregoing limiting part 3212 can achieve double limiting, so that a limiting effect is better.

In view of this, to prevent the connecting rib 3217, the first matching part 321, and the first connecting part 322 as a whole from interfering with the first hinge member 34 in a process of switching between the unfolded state and the folded state, the opening extends to an end of the first hinge member 34 away from the base 31.

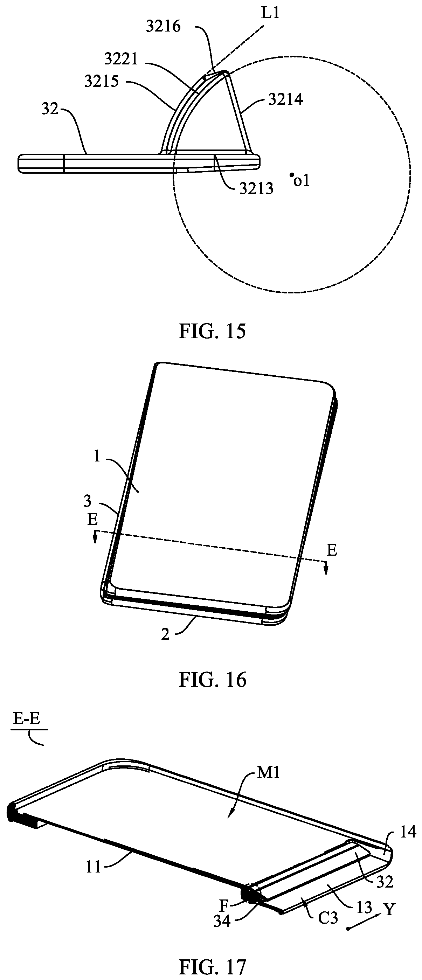

In some embodiments, referring to FIG. 14 and FIG. 15, FIG. 14 is a schematic partial view of fitting between the first shielding plate 32, the first matching part 321, and the first connecting part 322 shown in FIG. 12 and FIG. 13, and FIG. 15 is a side view of the structure shown in FIG. 14. The surface of the first matching part 321 (that is, the limiting part 3212) facing away from the first arc surface 371 is an arc-shaped structure surface 3215. A center line of curvature of the arc-shaped structure surface 3215 is the first center line of curvature o1. Therefore, the first matching part 321 is formed into a shape of an arc. The structure is simple and is easy to be processed and manufactured. In addition, because the arc-shaped structure surface 3215 uses the first center line of curvature o1 as a center line of curvature, in a process in which the foldable electronic device 100 switches between the unfolded state and the folded state, a distance between the arc-shaped structure surface 3215 and the third side wall surface 375 remains unchanged, so that interference between the arc-shaped structure surface 3215 and the third side wall surface 375 can be avoided.

It is clear that this application is not limited thereto. In another example, the first matching part 321 may alternatively be not provided with the arc-shaped structure surface 3215. For example, the first matching part 321 is formed into a half-cylinder, a 1/4 half-cylinder, or a 1/3 half-cylinder, provided that it is ensured that the first matching part 321 has the first arc matching surface 3211.

In view of this, still referring to FIG. 14 and FIG. 15, a clearance surface 3216 is formed at an end of the arc-shaped structure surface 3215 away from the first shielding plate 32. For example, the clearance surface 3216 includes but is not limited to a flat surface or a curved surface.

In a plane perpendicular to the first center line of curvature o1, a tangent line of an end of the arc-shaped structure surface 3215 close to the clearance surface 3216 is a first tangent line L1. The clearance surface 3216 is located on a side of the first tangent line L1 close to the first shielding plate 32. In this way, when the opening is a through hole, the clearance surface 3216 can prevent interference between the first housing 1 and the first shielding plate 32 and the first hinge member 34 in a process in which the first shielding plate 32 and the first hinge member 34 rotate relative to each other; and when the opening is a blind hole, the clearance surface 3216 can prevent interference between a hole bottom wall of the blind hole and the first shielding plate 32 and the first hinge member 34 in a process in which the first shielding plate 32 and the first hinge member 34 rotate relative to each other. In addition, provision of the clearance surface 3216 enables an overall size of the first shielding plate 32 and the first matching part 321 in the Z direction to be reduced, to further help reduce the thickness of the rotating shaft mechanism 3.

In another example, the first matching part 321 may alternatively not be provided with the foregoing clearance surface 3216.

Still refer to FIG. 14 and FIG. 15. On a circumferential direction of the cylindrical surface on which the first arc fitting surface 3221 is located, a surface of the first connecting part 322 further includes a first plane 3213 and a second plane 3214, and the first connecting part 322 is fixed to the first shielding plate 32 via the first plane 3213. One end of the first plane 3213 is connected to one end of the second plane 3214. The other end of the first plane 3213 and the other end of the second plane 3214 respectively extend toward directions away from each other and an included angle between the two planes is less than or equal to 90°. The first arc fitting surface 3221 is connected between the other end of the first plane 3213 and the other end of the second plane 3214. In this way, an orthographic projection of the entire first connecting part 322 on the plane on which the first shielding plate 32 is located on the first shielding plate 32, and the structure is compact.

In specific examples shown in FIG. 14 and FIG. 15, the first connecting part 322 is approximately in a shape of a sector. In another example, the first connecting part 322 may be in a shape of a cylinder or a cube.

### Example 2

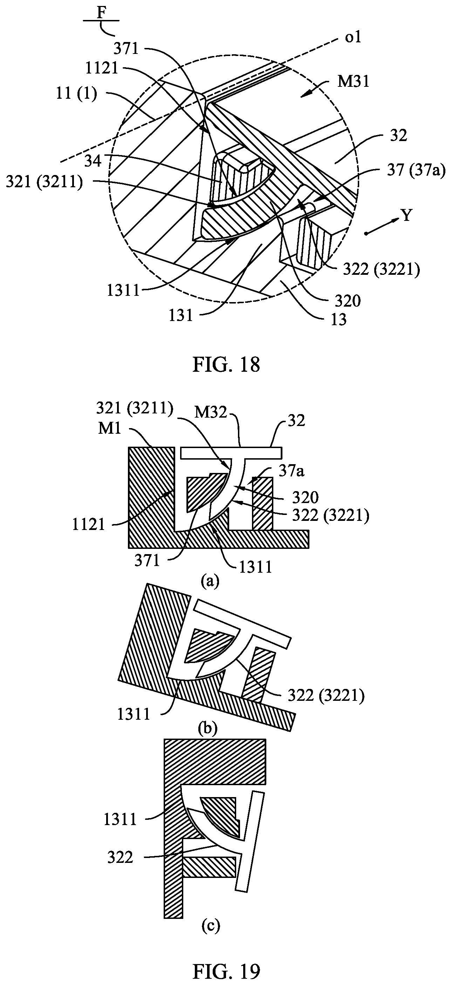

Refer to FIG. 16, FIG. 17, and FIG. 18. FIG. 16 is a schematic diagram of a structure of the support apparatus 10 in a folded state according to yet some embodiments of this application. FIG. 17 is a schematic diagram of fitting between a first shielding plate 32, a first middle frame 11, and a first hinge member 34 in a cross-sectional structure of the support apparatus 10 shown in FIG. 16 along a line E-E. FIG. 18 is an enlarged view of a part circled at a position F of the structure shown in FIG. 17. Differences between these embodiments and the foregoing embodiments lie in the following:
The first shielding plate 32 is provided with a first matching part 321 and a first connecting part 322.

The first hinge member 34 is provided with a first connecting structure 37. The first connecting structure 37 is provided with a first arc surface 371. A center line of curvature of the first arc surface 371 is a first center line of curvature o1. The first center line of curvature o1 extends along the Y-axis direction. An extension path of the first arc surface 371 may be a major arc (that is, an arc with a central angle greater than 180°), a minor arc (that is, an arc with a central angle less than 180°), or a semi-circular arc (that is, an arc with a central angle equal to 180°). This is not specifically limited herein.

The first housing 1 is provided with a first fixed structure 131. The first fixed structure 131 is provided with a first arc-shaped surface 1311. A center line of curvature of the first arc-shaped surface 1311 is also the first center line of curvature o1. An extension path of the first arc-shaped surface 1311 may be a major arc (that is, an arc with a central angle greater than 180°), a minor arc (that is, an arc with a central angle less than 180°), or a semi-circular arc (that is, an arc with a central angle equal to 180°). This is not specifically limited herein.

The first arc-shaped surface 1311 and the first arc surface 371 are both located on a same side of the first center line of curvature o1.

The first arc-shaped surface 1311 and the first arc surface 371 have opposite orientations. To be specific, one of the first arc-shaped surface 1311 and the first arc surface 371 faces the first center line of curvature o1, and the other of the first arc-shaped surface 1311 and the first arc surface 371 faces away from the first center line of curvature o1. Specifically, when the first arc surface 371 faces the first center line of curvature o1, the first arc-shaped surface 1311 faces away from the first center line of curvature o1; and when the first arc surface 371 faces away from the first center line of curvature o1, the first arc-shaped surface 1311 faces the first center line of curvature o1. In a specific example shown in FIG. 18, the first arc-shaped surface 1311 faces the first center line of curvature o1, and the first arc surface 371 faces away from the first center line of curvature o1.

The first arc-shaped surface 1311 and the first arc surface 371 both arch toward a side on which the base 31 is located. In another example, when the foldable electronic device 100 is an outward-foldable electronic device, the first arc-shaped surface 1311 and the first arc surface 371 arch toward a side away from the base 31.

Still refer to FIG. 16 and FIG. 17. On at least one section of a switching path along which the foldable electronic device 100 switches between the unfolded state and the folded state, the first matching part 321 slides along the first arc surface 371, and the first connecting part 322 slides along the first arc-shaped surface 1311. Specifically, because the first housing 1 is fixedly connected to the first hinge member 34, in a manner in which the first matching part 321 slides along the first arc surface 371 and the first connecting part 322 slides along the first arc-shaped surface 1311, the first shielding plate 32 and the first hinge member 34 can rotate relative to each other using the first center line of curvature o1 as a rotation center line. In addition, because the first arc surface 371 and the first arc-shaped surface 1311 have opposite orientations, in a radial direction of the first arc surface 371, the first matching part 321 and the first connecting part 322 can be positionally limited between the first arc surface 371 and the first arc-shaped surface 1311, or the first arc surface 371 and the first arc-shaped surface 1311 can be positionally limited between the first matching part 321 and the first connecting part 322, so that reliability of fitting is high. In addition, providing the first arc-shaped surface 1311 on the first housing 1 is beneficial to avoid providing, on the first hinge member 34, an arc-shaped surface that is used for sliding fit with the first connecting part 322, or reduce an arc length of the arc-shaped surface that is provided on the first hinge member 34 and that is used for sliding fit with the first connecting part 322. In this way, it is beneficial to reduce the thickness of the first hinge member 34, reduce a size of the rotating shaft mechanism 3 in the Z direction, and further achieve a design of a thin rotating shaft mechanism 3. In addition, because a spatial layout of the first housing 1 is large, an arc length of the first arc-shaped surface 1311 provided on the first housing 1 may be set to be large, and this is beneficial to improve reliability of fitting between the first hinge member 34 and the first shielding plate 32.

FIG. 19 is a schematic partial view of the rotating shaft mechanism shown in FIG. 18 in a process of switching between the unfolded state and the folded state. As shown in (a) of FIG. 19, in the unfolded state, the first connecting part 322 fits with the first arc-shaped surface 1311. As shown in (b) of FIG. 19, when the unfolded state is switched to the folded state, the first connecting part 322 slides along the first arc-shaped surface 1311. As shown in (c) of FIG. 19, in the folded state, the first connecting part 322 fits with the first arc-shaped surface 1311. In this way, on the entire switching path along which the foldable electronic device 100 switches between the unfolded state and the folded state, the first connecting part 322 slides only along the first arc-shaped surface 1311. In this case, the first hinge member 34 does not need to be provided with an arc-shaped surface configured to be in sliding fit with the first connecting part 322. This is beneficial to further reduce the thickness of the first hinge member 34, and achieve a design of a thin rotating shaft mechanism 3.

Still refer to FIG. 18 and FIG. 19. The first arc-shaped surface 1311 is located on a side of the first arc surface 371 away from the first center line of curvature o1. The first arc surface 371 and the first arc-shaped surface 1311 face each other. Therefore, the first arc surface 371 and the first arc-shaped surface 1311 at least partially directly face each other radially. Therefore, a first arc-shaped sliding slot 3411 may be defined between the first arc surface 371 and the first arc-shaped surface 1311. When the foldable electronic device 100 switches between the unfolded state and the folded state, the first connecting part 322 and the first matching part 321 are both located in the first arc-shaped sliding slot 3411. In this way, the structure is simple, and reliability of fitting is higher.

In addition, because the first arc-shaped surface 1311 is located on the side of the first arc surface 371 away from the first center line of curvature o1, a diameter of the first arc-shaped surface 1311 is greater than a diameter of the first arc surface 371, and when the first shielding plate 32 rotates by a same angle, a moving path of the first connecting part 322 is inevitably longer than a moving path of the first matching part 321. In this case, it is more beneficial to optimize the arc length of the first arc-shaped surface 1311, improve reliability of fitting between the first connecting part 322 and the first arc-shaped surface 1311, and improve reliability of fitting between the first hinge member 34 and the first shielding plate 32.

Still refer to FIG. 18 and FIG. 19. The first fixed structure 131 is fixed to a surface that is of the first connecting plate 13 and that has a same orientation as the first support surface M1. The first fixed structure 131 is located at an end of the first connecting plate 13 close to the first side surface 1121. In this way, the first shielding plate 32 and the first hinge member 34 can be covered by the first connecting plate 13, so that the first connecting plate 13 can be used to protect the part of the structure, aesthetics of an appearance can be improved, and structural compactness is better.

Still refer to FIG. 18 and FIG. 19. The first fixed structure 131 is a raised structure projecting from the first connecting plate 13. Specifically, the first fixed structure 131 and the first connecting plate 13 may be an integral structure. In other words, the first fixed structure 131 and the first connecting plate 13 may be an integrally formed piece. In this way, it is beneficial to improve connection strength between the first fixed structure 131 and the first connecting plate 13, simplify a processing process, and reduce manufacturing costs. In another example, a manner of connecting the first fixed structure 131 and the first connecting plate 13 may alternatively be gluing, welding, clamping, or screwing.

The first connecting structure 37 is a through hole 37a formed in the first hinge member 34. The through hole 37a extends from an end of the first hinge member 34 facing the first shielding plate 32 to an end of the first hinge member 34 facing away from the first shielding plate 32.

The first arc surface 371 is formed on a wall of the through hole 37a. The first fixed structure 131 is located in the through hole 37a. Therefore, the structure is compact, and it is beneficial to reduce an overall size of the rotating shaft mechanism 3 in the Z direction, to achieve a design of a thin rotating shaft mechanism 3.

Still refer to FIG. 18 and FIG. 19. A surface of the first shielding plate 32 facing away from the first support sub-surface M31 is provided with an arc-shaped sliding block 320. An end of the arc-shaped sliding block 320 along an extension trajectory of the arc-shaped sliding block 320 is connected to the first shielding plate 32. Arc-shaped surfaces on two radial sides of the arc-shaped sliding block 320 are respectively a first arc matching surface 3211 and a first arc fitting surface 3221. The first arc matching surface 3211 and the first arc fitting surface 3221 share a same center line of curvature, which is the first center line of curvature o1.

The first arc matching surface 3211 is the first matching part 321. A diameter of the first arc matching surface 3211 is equal to that of the first arc surface 371. Therefore, a contact area between the first arc matching surface and the first arc surface 371 is large, and reliability of sliding fit between the first arc matching surface and the first arc surface 371 is high.

The first arc fitting surface 3221 is the first connecting part 322. A diameter of the first arc fitting surface 3221 is equal to that of the first arc-shaped surface 1311. Therefore, a contact area between the first arc fitting surface 3221 and the first arc-shaped surface 1311 is large, and reliability of sliding fit between the first arc fitting surface 3211 and the first arc-shaped surface 1311 is high.

In some embodiments, in the unfolded state, an overlap width between the first arc fitting surface 3221 and the first arc-shaped surface 1311 is greater than or equal to 0.3 mm and less than or equal to 2 mm. Specifically, when the overlap width between the first arc fitting surface 3221 and the first arc-shaped surface 1311 is set to be excessively small, unreliable fitting between the first shielding plate 32 and the first hinge member 34 is easily caused. In addition, when the overlap width between the first arc fitting surface 3221 and the first arc-shaped surface 1311 is set to be excessively large, arc lengths of the first arc fitting surface 3221 and the first arc-shaped surface 1311 inevitably also increase. Consequently, the overall size of the rotating shaft mechanism 3 increases, and this is not beneficial to reduction of the thickness of the rotating shaft mechanism 3. In view of this, in the unfolded state, the overlap width between the first arc fitting surface 3221 and the first arc-shaped surface 1311 is greater than or equal to 0.4 mm and less than or equal to 2 mm, and this is beneficial to further ensure both reliability of fitting between the first shielding plate 32 and the first hinge member 34 and a design of a thin rotating shaft mechanism 3.

For example, the overlap width between the first arc fitting surface 3221 and the first arc-shaped surface 1311 is 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, or 1.9 mm.

It should be noted that, when the first arc fitting surface 3221 overlaps the first arc-shaped surface 1311, an overlap region is formed between the first arc fitting surface 3221 and the first arc-shaped surface 1311. The overlap region is also in a shape of an arc. When the overlap width is measured, the overlap width may be an arc length of the overlap region, or may be a chord length of the overlap region.

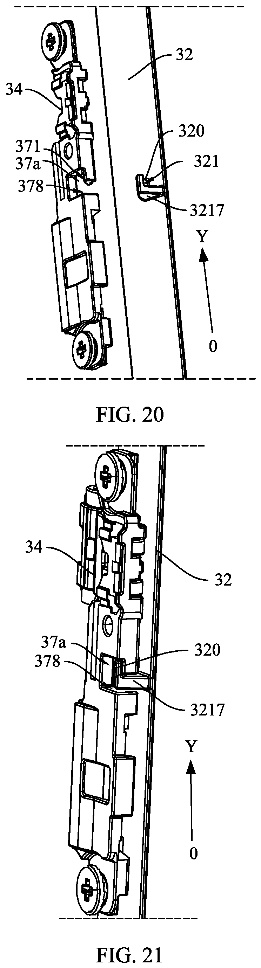

FIG. 20 is a schematic exploded view of a partial structure of the first shielding plate 32 and the first hinge member 34 shown in FIG. 17. An end of the arc-shaped sliding block 320 along the Y-axis direction is provided with a connecting rib 3217. The connecting rib 3217 is connected to the first shielding plate 32. Therefore, it is beneficial to improve connection strength between the arc-shaped sliding block 320 and the first shielding plate 32.

For example, the connecting rib 3217, the first shielding plate 32, and the arc-shaped sliding block 320 may be an integrally formed piece. Therefore, a processing process can be simplified, and manufacturing costs can be reduced. In another example, the connecting rib 3217 and the first shielding plate 32 as well as the connecting rib 3217 and the arc-shaped sliding block 320 may alternatively be connected by gluing, welding, clamping, or screwing.

Still refer to FIG. 20, and refer to FIG. 21 together. FIG. 21 is an assembly diagram of the partial structure of the first shielding plate 32 and the first hinge member 34 shown in FIG. 20. To prevent the connecting rib 3217 from interfering with relative movement of the first shielding plate 32 and the first hinge member 34, a clearance hole 378 is provided on the first hinge member 34. The clearance hole 378 is located at an end of the through hole 37a in the Y-axis direction and is in communication with the through hole 37a. The connecting rib 3217 passes through the clearance hole 378.

In view of this, to prevent interference between the connecting rib 3217 and the first hinge member 34, the clearance hole 378 extends to an end of the first hinge member 34 away from the base 31.

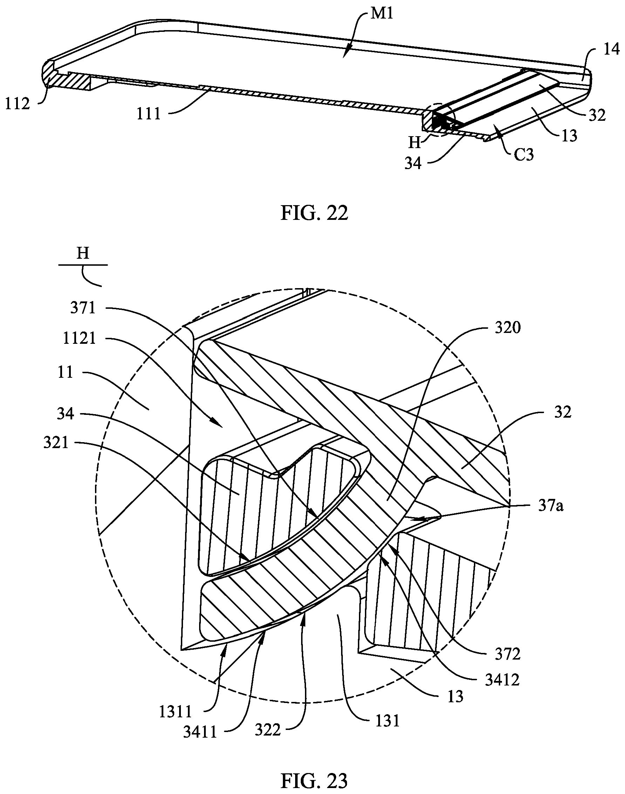

FIG. 22 is a cross-sectional view of assembly of the first middle frame 11, the first hinge member 34, and the first shielding plate 32 according to yet some other embodiments of this application. FIG. 23 is an enlarged view of a part circled at a position H of the structure shown in FIG. 22. Difference between these embodiments and the foregoing embodiments shown in FIG. 16 to FIG. 21 lie in the following: The first hinge member 34 is provided with a first arc sliding surface 372. In a specific example shown in FIG. 23, the first arc sliding surface 372 is formed on a wall of the through hole 37a facing the first arc surface 371.

The first arc sliding surface 372 and the first arc-shaped surface 1311 share a same cylindrical surface. In other words, a center line of curvature of the first arc sliding surface 372 is the first center line of curvature o1. A diameter of the first arc sliding surface 372 is equal to that of the first arc-shaped surface 1311. The first arc sliding surface 372 is located on a side of the first arc-shaped surface 1311 that is on an arc-shaped extending trajectory of the first arc-shaped surface 1311 and that is close to the base 31. The first arc sliding surface 372 and the first arc surface 371 face each other. To be specific, the first arc sliding surface 372 and the first arc surface 371 at least partially directly face each other radially. In this way, the first arc sliding surface 372 and the first arc surface 371 may define a second arc-shaped sliding slot 3412. In this way, an overall arc length of the first arc-shaped surface 1311 and the first arc sliding surface 372 is large. When the foldable electronic device 100 switches between the unfolded state and the folded state, the first connecting part 322 slides along the first arc sliding surface 372, and the arc-shaped sliding block 320 is in sliding fit with the second arc-shaped sliding slot 3412. The structure is simple, and reliability of fitting is higher.

For example, a central angle corresponding to the first arc sliding surface 372 is less than or equal to 40°. For example, a central angle corresponding to the first arc sliding surface 372 is 30°, 25°, 20°, 10°, or 5°.

For example, the arc length of the first arc sliding surface 372 is less than or equal to 1 mm. For example, the arc length of the first arc sliding surface 372 is 0.8 mm, 0.7 mm, 0.6 mm, 0.5 mm, 0.4 mm, or 0.3 mm.

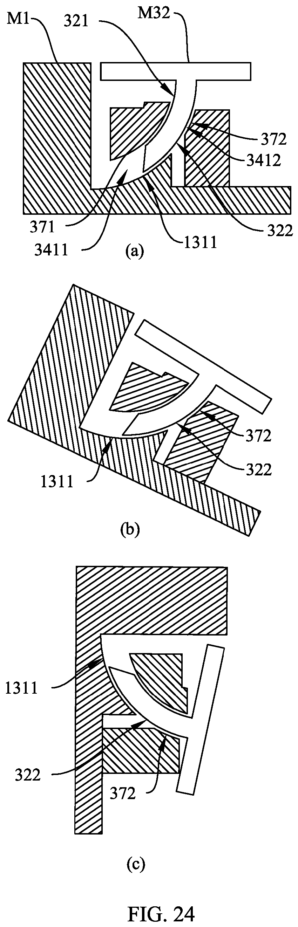

In some specific examples, FIG. 24 is a schematic partial view of the foldable electronic device 100 that has the structure shown in FIG. 22 and that is in a process of switching between the unfolded state and the folded state. As shown in (a) of FIG. 24, in the unfolded state, the first connecting part 322 fits with the first arc sliding surface 372, and the first connecting part 322 fits with the first arc-shaped surface 1311. As shown in (b) of FIG. 24, when the foldable electronic device 100 switches from the unfolded state to the folded state, the first connecting part 322 slides along the first arc sliding surface 372 and the first arc-shaped surface 1311. When the foldable electronic device 100 switches to the folded state, as shown in (c) in FIG. 24, the first connecting part 322 fits with the first arc sliding surface 372, and the first connecting part 322 fits with the first arc-shaped surface 1311.

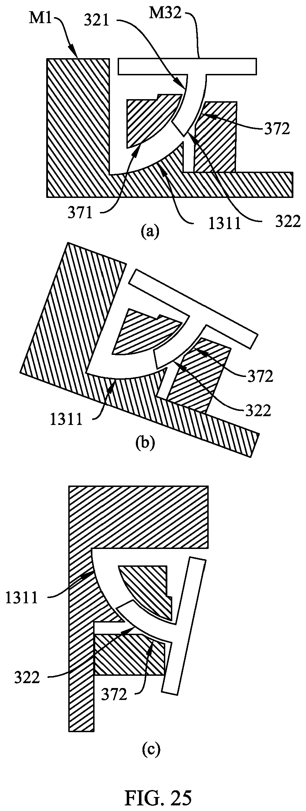

It may be understood that, in another example, a process of switching between the unfolded state and the folded state, the first connecting part 322, the first arc sliding surface 372, and the first arc-shaped surface 1311 may alternatively have another fitting form. Specifically, FIG. 25 is a schematic partial view of the foldable electronic device 100 in a process of switching between the unfolded state and the folded state according to still yet some other embodiments of this application. As shown in (a) of FIG. 25, in the unfolded state, the first connecting part 322 fits with the first arc sliding surface 372, and the first connecting part 322 does not fit with the first arc-shaped surface 1311. As shown in (b) of FIG. 25, when the foldable electronic device 100 switches from the unfolded state to the folded state into a preset angle, the first connecting part 322 slides along both the first arc sliding surface 372 and the first arc-shaped surface 1311. When the foldable electronic device 100 switches to the folded state, as shown in (c) in FIG. 25, the first connecting part 322 fits with the first arc sliding surface 372, and the first connecting part 322 fits with the first arc-shaped surface 1311.

It should be noted that, in any one of the foregoing embodiments shown in FIG. 16 to FIG. 25 in Example 2, descriptions are provided by using an example in which the first arc surface 371 and the first arc-shaped surface 1311 face each other. In another example, the first arc surface 371 and the first arc-shaped surface 1311 may be staggered in the radial direction. In other words, the first arc surface 371 and the first arc-shaped surface 1311 are distributed in the Y-axis direction. In this way, reliability of fitting between the first matching part 321 and the first arc surface 371 and reliability of fitting between the first connecting part 322 and the first arc-shaped surface 1311 are not limited by a radial distance between the first arc surface 371 and the first arc-shaped surface 1311. In this way, it is beneficial to ensure that the first arc surface 371 and the first arc-shaped surface 1311 have large arc lengths and ensure that the first hinge member 34 and the first shielding plate 32 can fit reliably, to help further reduce overall thickness of the first hinge member 34 and the first connecting structure by reducing a distance between the first arc surface 371 and the first arc-shaped surface 1311 in the radial direction of the first arc surface 371, so as to further achieve reduction of the thickness of the rotating shaft mechanism 3.

In view of this, when the first hinge member 34 is further provided with the first arc sliding surface 372, the first arc sliding surface 372 and the first arc-shaped surface 1311 are distributed along a length direction of the Y axis. In this case, further, for specific structures of and a connection relationship between the first shielding plate 32, the first hinge member 34, the first connecting part 322, the first matching part 321, and the first connecting structure 37, reference may be made to Example 1, and details are not described herein again.

Based on any one of embodiments in Example 1 and Example 2, in some embodiments, the second shielding plate 33 is provided with a second matching part and a second connecting part.

The second hinge member 35 is provided with a second connecting structure. The second connecting structure is provided with a second arc surface and a second arc sliding surface. The second arc surface and the second arc sliding surface share a same center line of curvature, which is a second center line of curvature. The second center line of curvature extends along the Y-axis direction. The second center line of curvature is parallel to the first center line of curvature o1.

The second arc surface and the second arc sliding surface are located on a same side of the second center line of curvature. The second arc surface and the second arc sliding surface have opposite orientations. When the foldable electronic device 100 switches between the unfolded state and the folded state, the second matching part slides along the second arc surface, and the second connecting part slides along the second arc sliding surface. In this way, the second shielding plate 33 and the second hinge member 35 can rotate relative to each other using the second center line of curvature as a rotation center line. In addition, because the second arc surface and the second arc sliding surface have opposite orientations, in a radial direction of the second arc surface, the second matching part and the second connecting part can be positionally limited between the second arc surface and the second arc sliding surface, or the second arc surface and the second arc sliding surface can be positionally limited between the second matching part and the second connecting part, so that reliability of fitting is high.

In view of this, the second matching part and the second connecting part are distributed in the Y-axis direction. The second arc surface and the second arc sliding surface are distributed in the Y-axis direction. In this way, the second arc surface and the second arc sliding surface are staggered in the radial direction of the second arc surface. Therefore, reliability of fitting between the second matching part and the second arc surface and reliability of fitting between the second connecting part and the second arc sliding surface are not limited by a radial distance between the second arc surface and the second arc sliding surface. In this way, it is beneficial to ensure that the second arc surface and the second arc surface have large arc lengths and ensure that the second hinge member 35 and the second shielding plate 33 can fit reliably, to help reduce an overall size of the second hinge member 35 and the second connecting structure in the Z direction by reducing a distance between the second arc surface and the second arc sliding surface in the radial direction of the second arc surface, so as to facilitate reduction of the thickness of the rotating shaft mechanism 3.

In this embodiment, a specific structure of the second matching part may be the same as the structure of the first matching part 321 in Example 1, and a specific structure of the second connecting part may be the same as the structure of the first connecting part 322 in Example 1. A specific structure of the second connecting structure may be the same as that of the first connecting structure 37 in Example 1. An assembly relationship between the second matching part, the second connecting part, and the second connecting structure may be the same as an assembly relationship between the first matching part 321, the first connecting part 322, and the first connecting structure 37 in Example 1. Details are not described herein again.

Based on any one of embodiments in Example 1 and Example 2, in some other embodiments, the second shielding plate 33 is provided with a second matching part and a second connecting part.

The second hinge member 35 is provided with a second connecting structure. The second connecting structure is provided with a second arc surface. A center line of curvature of the second arc surface is a second center line of curvature. The second center line of curvature extends along the Y-axis direction. The second center line of curvature is parallel to the first center line of curvature o 1.

The second housing 2 is provided with a second fixed structure. The second fixed structure is provided with a second arc-shaped surface. The second arc-shaped surface and the second arc surface are both located on a same side of the second center line of curvature. The second arc-shaped surface and the second arc surface have opposite orientations. On at least one section of a switching path along which the foldable electronic device switches between the unfolded state and the folded state, the second matching part slides along the second arc surface, and the second connecting part slides along the second arc-shaped surface. Specifically, because the second housing 2 is fixedly connected to the second hinge member 35, in a manner in which the second matching part slides along the second arc surface and the second connecting part slides along the second arc-shaped surface, the second shielding plate 33 and the second hinge member 35 can rotate relative to each other using the second center line of curvature as a rotation center line. In addition, because the second arc surface and the second arc-shaped surface have opposite orientations, in a radial direction of the second arc surface, the second matching part and the second connecting part can be positionally limited between the second arc surface and the second arc-shaped surface, or the second arc surface and the second arc-shaped surface can be positionally limited between the second matching part and the second connecting part, so that reliability of fitting is high.

In addition, providing the second arc-shaped surface on the second housing 2 is beneficial to avoid providing, on the second hinge member 35, an arc-shaped surface that is used for sliding fit with the second connecting part, or reduce an arc length of the arc-shaped surface that is provided on the second hinge member 35 and that is used for sliding fit with the second connecting part. In this way, it is beneficial to reduce the thickness of the second hinge member 35, and further achieve a design of a thin rotating shaft mechanism 3. In addition, because a spatial layout of the second housing 2 is large, an arc length of the second arc-shaped surface provided on the second housing 2 may be set to be large, and this is beneficial to improve reliability of fitting between the second hinge member 35 and the second shielding plate 33.

In this embodiment, a specific structure of the second matching part may be the same as the structure of the first matching part 321 in Example 2, and a specific structure of the second connecting part may be the same as the structure of the first connecting part 322 in Example 2. A specific structure of the second connecting structure may be the same as that of the first connecting structure 37 in Example 2. A specific structure of the second fixed structure may be the same as that of the first fixed structure 131 in Example 2. An assembly relationship between the second matching part, the second connecting part, the second connecting structure, and the second fixed structure may be the same as an assembly relationship between the first matching part 321, the first connecting part 322, the first connecting structure 37, and the first fixed structure 131 in Example 2. Details are not described herein again.

In the descriptions of this specification, the specific features, structures, materials, or characteristics may be combined in a proper manner in any one or more of embodiments or examples.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, and such modifications and replacements do not cause the essence of the corresponding technical solutions to depart from the spirit and scope of the technical solutions of embodiments of this application.

## Claims

1. A foldable electronic device, comprising: a first housing and a rotating shaft mechanism, wherein
the rotating shaft mechanism comprises a base, a first shielding plate, and a first hinge member;
the first shielding plate is provided with a first matching part and a first connecting part;
the first hinge member is fixedly connected to the first housing, and the first hinge member is hingedly connected to one side of the base;
the first hinge member is provided with a first connecting structure corresponding to the first matching part and the first connecting part on the first shielding plate, the first connecting structure is provided with a first arc surface and a first arc sliding surface, the first arc surface and the first arc sliding surface share a same center line of curvature, which is a first center line of curvature, the first arc surface and the first arc sliding surface are located on a same side of the first center line of curvature and have opposite orientations, and the first arc surface and the first arc sliding surface are distributed in an extension direction of the first center line of curvature; and
when the foldable electronic device switches between an unfolded state and a folded state, the first matching part slides along the first arc surface, and the first connecting part slides along the first arc sliding surface.

2. The foldable electronic device according to claim 1, wherein the first connecting structure is an opening formed on the first hinge member, the first arc surface and the first arc sliding surface are both provided in the opening, and the first matching part and the first connecting part are located in the opening.

3. The foldable electronic device according to claim 2, wherein the opening has a first side wall surface, a second side wall surface, and a third side wall surface, the first side wall surface and the second side wall surface face each other in the extension direction of the first center line of curvature, the third side wall surface is connected between an end of the first side wall surface close to the base and an end of the second side wall surface close to the base, the first side wall surface is provided with a raised part extending toward the second side wall surface, the first matching part is located between the raised part and the third side wall surface, and the first arc surface is formed on a surface of the raised part facing the first matching part.

4. The foldable electronic device according to claim 3, wherein the first matching part has a first arc matching surface, a limiting space is formed between the first shielding plate and a side of the first matching part that the first arc matching surface faces, the raised part is located in the limiting space, and the first matching part is in sliding fit with the first arc surface via the first arc matching surface.

5. The foldable electronic device according to claim 4, wherein the second side wall surface comprises a first region and a second region, the second region is recessed relative to the first region toward a direction away from the first side wall surface to define a recess, the first arc sliding surface is formed on a side wall of the recess, and the first connecting part is located in the recess.

6. The foldable electronic device according to claim 5, wherein the first matching part has a limiting part, and in the extension direction of the first center line of curvature, the limiting part is positionally limited between the first side wall surface and the first region.

7. The foldable electronic device according to claim 5 or 6, wherein an end of the first arc matching surface close to the first connecting part is provided with a connecting rib, the connecting rib is separately connected to the first shielding plate and the first connecting part, and the connecting rib together with the first connecting part are positionally limited between the bottom wall of the recess and the raised part.

8. The foldable electronic device according to any one of claims 2 to 7, wherein a surface of the first matching part facing away from the first arc surface is an arc-shaped structure surface, and a center line of curvature of the arc-shaped structure surface is the first center line of curvature.

9. The foldable electronic device according to claim 8, wherein a clearance surface is formed at an end of the arc-shaped structure surface away from the first shielding plate; and
in a plane perpendicular to the first center line of curvature, a tangent line of an end of the arc-shaped structure surface close to the clearance surface is a first tangent line, and the clearance surface is located on a side of the first tangent line close to the first shielding plate.

10. The foldable electronic device according to any one of claims 1 to 9, wherein an absolute value of a difference between a diameter of the first arc surface and that of the first arc sliding surface is greater than or equal to 0 and less than or equal to 2 mm.

11. The foldable electronic device according to any one of claims 1 to 10, wherein the first matching part has the first arc matching surface, a center line of curvature of the first arc matching surface is the first center line of curvature, a diameter of the first arc matching surface is the same as that of the first arc surface, and the first matching part is in sliding fit with the first arc surface via the first arc matching surface; and/or
the first connecting part has a first arc fitting surface, a center line of curvature of the first arc fitting surface is the first center line of curvature, a diameter of the first arc fitting surface is equal to that of the first arc sliding surface, and the first connecting part is in sliding fit with the first arc sliding surface via the first arc fitting surface.

12. The foldable electronic device according to any one of claims 1 to 11, wherein the foldable electronic device comprises a second housing;
the rotating shaft mechanism further comprises a second shielding plate and a second hinge member;
the second shielding plate is provided with a second matching part and a second connecting part;
the second hinge member is fixedly connected to the second housing, and the second hinge member is hingedly connected to another side of the base;
the second hinge member is provided with a second connecting structure corresponding to the second matching part and the second connecting part on the second shielding plate, the second connecting structure is provided with a second arc surface and a second arc sliding surface, the second arc surface and the second arc sliding surface share a same center line of curvature, which is a second center line of curvature, the second arc surface and the second arc sliding surface are located on a same side of the second center line of curvature and have opposite orientations, the second arc surface and the second arc sliding surface are distributed in an extension direction of the second center line of curvature, and the second center line of curvature is parallel to the first center line of curvature; and
when the foldable electronic device switches between the unfolded state and the folded state, the second matching part slides along the second arc surface, and the second connecting part slides along the second arc sliding surface.

13. A foldable electronic device, comprising: a rotating shaft mechanism and a first housing, wherein
the rotating shaft mechanism comprises a base, a first shielding plate, and a first hinge member;
the first shielding plate is provided with a first matching part and a first connecting part;
the first hinge member is fixedly connected to the first housing, and the first hinge member is hingedly connected to one side of the base;
the first hinge member is provided with a first connecting structure corresponding to the first matching part and the first connecting part on the first shielding plate, and the first connecting structure is provided with a first arc surface;
the first housing is provided with a first fixed structure, and the first fixed structure is provided with a first arc-shaped surface;
the first arc-shaped surface and the first arc surface share a same center line of curvature, which is a first center line of curvature, and the first arc-shaped surface and the first arc surface are both located on a same side of the first center line of curvature and have opposite orientations; and
on at least one section of a switching path along which the foldable electronic device switches between an unfolded state and a folded state, the first matching part slides along the first arc surface, and the first connecting part slides along the first arc-shaped surface.

14. The foldable electronic device according to claim 13, wherein the first arc-shaped surface is located on a side of the first arc surface away from the first center line of curvature, and faces the first arc surface.

15. The foldable electronic device according to claim 14, wherein an arc-shaped sliding block is provided on the first shielding plate, arc-shaped surfaces on two radial sides of the arc-shaped sliding block are respectively a first arc matching surface and a first arc fitting surface, the first matching part is the first arc matching surface, and the first connecting part is the first arc fitting surface; and
the first arc matching surface and the first arc fitting surface share a same center line of curvature, which is the first center line of curvature, wherein
a diameter of the first arc matching surface is equal to a diameter of the first arc surface, and a diameter of the first arc fitting surface is equal to a diameter of the first arc-shaped surface.

16. The foldable electronic device according to claim 15, wherein in the unfolded state, an overlap width between the first arc fitting surface and the first arc-shaped surface is greater than or equal to 0.3 mm and less than or equal to 2 mm.

17. The foldable electronic device according to claim 13, wherein the first arc-shaped surface and the first arc surface are distributed in an extension direction of the first center line of curvature.

18. The foldable electronic device according to any one of claims 13 to 17, wherein the first connecting structure is a through hole formed in the first hinge member, the first arc surface is formed on a wall of the through hole, and the first fixed structure is located in the through hole.

19. The foldable electronic device according to any one of claims 13 to 18, wherein on the entire switching path along which the foldable electronic device switches between the unfolded state and the folded state, the first connecting part slides only along the first arc-shaped surface.

20. The foldable electronic device according to any one of claims 13 to 18, wherein the first connecting structure is provided with a first arc sliding surface, and the first arc sliding surface and the first arc-shaped surface share a same cylindrical surface; and
the first arc sliding surface is located on a side of the first arc-shaped surface that is on an arc-shaped extending trajectory of the first arc-shaped surface and that is close to the base, and the first connecting part is in sliding fit with the first arc sliding surface.

21. The foldable electronic device according to claim 20, wherein the foldable electronic device is the foldable electronic device according to claim 18; and
the first arc sliding surface is formed on a wall of the through hole facing the first arc surface, and the first arc sliding surface and the first arc surface face each other.

22. The foldable electronic device according to any one of claims 13 to 21, wherein the first housing comprises a first middle frame and a first connecting plate; and
the first middle frame has a first support surface, the first middle frame further has a first side surface facing the rotating shaft mechanism, the first connecting plate is on a side of the first middle frame close to the rotating shaft mechanism, the first connecting plate and the first support surface are at opposite ends of the first side surface, and the first fixed structure is fixed to a surface that is of the first connecting plate and that has a same orientation as the first support surface, and is located at an end of the first connecting plate close to the first side surface.
